# EUROPEAN PATENT SPECIFICATION

(11) **EP 2 309 209 B1**
(45) Date of publication and mention of the grant of the patent: **24.03.2021**
(21) Application number: 09738805.2
(22) Date of filing: 28.04.2009
(51) Int. Cl.: F25B 1/10, F24H 1/00, F25B 1/00, F24D 17/02, F24D 3/18, F25B 31/00, F25B 40/00, F25B 9/00

(54) **REFRIGERATION UNIT**
KÜHLEINHEIT
UNITÉ DE RÉFRIGÉRATION

(30) Priority: 02.05.2008 JP 2008120738
(43) Date of publication of application: 13.04.2011
(73) Proprietor: Daikin Industries, Ltd., Osaka 530-8323 (JP)
(72) Inventor: FUJIMOTO, Shuji, Sakai-shi Osaka 591-8511 (JP); YOSHIMI, Atsushi, Sakai-shi Osaka 591-8511 (JP); YAMAGUCHI, Takahiro, Sakai-shi Osaka 591-8511 (JP); INAZUKA, Tooru, Sakai-shi Osaka 591-8511 (JP); FURUSHO, Kazuhiro, Sakai-shi Osaka 591-8511 (JP); UCHIDA, Mitsuharu, Kusatsu-shi Shiga 525-8526 (JP); KATAOKA, Hidehiko, Kusatsu-shi Shiga 525-8526 (JP)
(74) Representative: Hoffmann Eitle
(86) International application number: PCT/JP2009/058311
(87) International publication number: WO 2009/133868

(56) References cited:
- DE-A1-102006 016 750
- JP-A- 2001 099 503
- JP-A- 2002 106 988
- JP-A- 2002 106 988
- JP-A- 2004 116 957
- JP-A- 2006 292 281
- JP-A- 2007 263 390
- JP-A- 2007 263 390
- JP-U- 2 073 562
- US-A1- 2005 115 260
- US-A1- 2006 191 288

## Description

### TECHNICAL FIELD

The present invention relates to a refrigeration apparatus, and particularly relates to a refrigeration apparatus which performs a multi-stage compression-type refrigeration cycle using refrigerant that operates including the process of a supercritical state.

### BACKGROUND ART

In conventional practice, one example of a refrigeration apparatus which performs a multi-stage compression-type refrigeration cycle using refrigerant that operates in a supercritical range is an air-conditioning apparatus which performs a two-stage compression-type refrigeration cycle using carbon dioxide as a refrigerant, such as the apparatus disclosed in Patent Literature 1 (Japanese Laid-open Patent Application No. 2007-232263).

An example of an apparatus that uses such a two-stage compression-type refrigeration cycle as a water heater is a water heater such as the one disclosed in Patent Literature 2 (Japanese Laid-open Patent Application No. 2002-106988), for example. In this water heater, a conventional technique is used for improving compression efficiency by using an intercooler to cool refrigerant heading from a low-stage compression element to a high-stage compression element. Not only is water for a hot water supply heated in a gas cooler, but some of this heated water is branched off, part is successively led to and heated in the gas cooler while the other part is led to and heated in an intercooler, and hot water for a hot water supply is obtained. Thus, the intercooler can be used as a heater of hot water and also as a cooler of refrigerant drawn into the high-stage compression element, and energy efficiency can be improved.

In Patent Literature 3 (JP 2001-099503 A) heat utilizing side heat exchangers are formed of a first-third heat exchangers while compressors are formed of a fore stage compressor and a rear stage compressor. The heat exchange of refrigerant from the fore stage compressor is effected by the third heat exchanger and, thereafter, the refrigerant is compressed by the rear stage compressor and is circulated through the second heat exchanger and the first heat exchanger sequentially. The heat exchange between the utilizing side heating medium or supplying hot-water and the refrigerant is effected by the first heat exchanger and, thereafter, the flow of hot-water is distributed at a distributing unit and one part of the same is conducted to flow into the second heat exchanger while the other part of the same is distributed to flow into the third heat exchanger and, thereafter, these flows are joined at another joining unit Patent Literature 1 represents the closest prior art to the present invention.

Patent Literature 4 (JP 2002-106988 A) describes a compressor that is constituted of a fore stage compressing element and a rear stage compressing element while a first radiator is provided between the compressing elements to circulate the refrigerant. On the other hand, a third radiator, effecting heat exchange between supplied water and the refrigerant, and a distributing amount control valve, distributing the water, effecting heat exchange between the refrigerant through the third radiator to circulate the same through the first radiator, are provided. In this case, the opening degree of the distributing amount control valve is controlled in accordance with an evaporating temperature in an evaporator and the degree of super-heating of the refrigerant sucked into the fore stage compressing element is so that the discharging temperature of the refrigerant, discharged out of the rear stage compressing element, falls within a predetermined temperature range.

### SUMMARY OF INVENTION

### <Technical Problem>

In the water heater described above, water flowing into the intercooler has already been heated when passing through the gas cooler, and is warm water having a somewhat high temperature. Therefore, there could be cases in which the temperature of the warm water that has passed through the gas cooler and been heated is higher than the temperature of the refrigerant passing through the intercooler, for example. In such cases, not only is it not possible to heat the water in the intercooler, but it is also not possible to cool the refrigerant drawn into the high-stage compression element, and it is therefore not possible to improve compression efficiency.

An object of the present invention is to provide a refrigeration apparatus which uses refrigerant that operates including the process of a supercritical state, wherein it is possible to more reliably improve compression efficiency and make the heating of water for a hot water supply more efficient.

### <Solution to Problem>

A refrigeration apparatus according to a first aspect of the present invention is a refrigeration apparatus comprising: a water tube system having a water inlet tube for leading water supplied from the exterior to a water branching point, first branching water tubes and second branching water tubes extending from the water branching point, and a water outlet tube leading out to the exterior from a convergent point where the first branching water tubes and the second branching water tubes converge, wherein the active refrigerant is in a supercritical state in at least part of the refrigeration cycle; a main expansion mechanism, an evaporator, a first compression element, a second compression element, a first refrigerant tube, a first heat exchanger, second refrigerant tubes, a second heat exchanger and all further features of appended independent claim 1. The main expansion mechanism depressurizes the refrigerant. The evaporator is connected with the main expansion mechanism and the evaporator evaporates the refrigerant. The first compression element draws in refrigerant that has passed through the evaporator and compresses and discharges the refrigerant. The second compression element draws in the refrigerant discharged from the first compression element and further compresses and discharges the refrigerant. The first refrigerant tube draws the refrigerant discharged from the first compression element into the second compression element. The first heat exchanger performs heat exchange between the refrigerant passing through the first refrigerant tube and the water flowing through the first branching water tubes. The second refrigerant tubes connect the discharge side of the second compression element to one end of a second heat exchanger and the other end of the second heat exchanger to the main expansion mechanism so that the second heat exchanger subjects the refrigerant passing through the second refrigerant tubes to heat exchange with the water flowing through the second branching water tubes, and not to heat exchange with the water flowing through the water inlet tube, whereby said water flowing through the first branching water tubes, is not being heated by heat exchange with the refrigerant before flowing into the first heat exchanger therefore it has the same temperature as the water flowing through the water inlet tube, and water flowing through the second branching water tubes is not being heated by heat exchange with the refrigerant before flowing into the second heat exchanger. Herein, the first compression element and the second compression element may be either housed within the same casing or the like and controlled together, or disposed separately and controlled independently of each other.

Even if the intention is to warm the water passing through the water tube system in the first heat exchanger whose refrigerant temperature is lower than the second heat exchanger, for example, the temperature will sometimes be higher than the temperature of the refrigerant flowing through the first heat exchanger due to the water already being warmed before flowing into the first heat exchanger. In this case, there is a risk that it will not be possible to cool the refrigerant by heat exchange in the first heat exchanger, and that the water will be deprived of its heat by the refrigerant.

As a countermeasure to this, in this refrigeration apparatus, the second heat exchanger does not subject the refrigerant passing through the second refrigerant tube to heat exchange with the water flowing through the water inlet tube. Therefore, the water can be made to flow in during a state of low temperature in which not only is the water flowing into the second heat exchanger not yet heated by heat exchange with the refrigerant, but neither is the water flowing into the first heat exchanger.

Thereby, the refrigerant heading from the first compression element toward the second compression element is cooled to reliably improve compression efficiency, heat exchanging which can raise the water temperature can be reliably performed by both the first heat exchanger and the second heat exchanger, and the coefficient of performance of the refrigeration apparatus can be improved.

A refrigeration apparatus according to a second aspect of the present invention is the refrigeration apparatus according to the first aspect of the present invention, further comprising a flow rate ratio adjustment mechanism capable of adjusting the ratio between a quantity of water flowing through the first branching water tubes and a quantity of water flowing through the second branching water tubes.

According to this refrigeration apparatus, since it is possible to adjust the flow rate ratio between the quantity of water flowing through the first heat exchanger and the quantity of water flowing through the second heat exchanger, it is possible for the water to be heated efficiently.

A refrigeration apparatus according to a third aspect of the present invention is the refrigeration apparatus according to the second aspect of the present invention, further comprising a heating capacity detection unit and a water distribution quantity control unit. The heating capacity detection unit is capable of detecting the capacity of the refrigerant passing through the first heat exchanger to heat the water and the capacity of the refrigerant passing through the second heat exchanger to heat the water. The water distribution quantity control unit adjusts the ratio between the quantity of water flowing through the first branching water tubes and the quantity of water flowing through the second branching water tubes by controlling the flow rate adjustment mechanism in accordance with the ratio between the heating capacities of the first heat exchanger and the second heat exchanger detected by the heating capacity detection unit. The control by this water distribution quantity control unit may involve, for example, adjusting the ratio between the quantity of water flowing through the first branching water tubes and the quantity of water flowing through the second branching water tubes, either so as to achieve equality with the ratio between a first specific enthalpy obtained by subtracting the specific enthalpy of the refrigerant discharged from the first compression element from the specific enthalpy of the refrigerant drawn into the second compression element, and a second specific enthalpy obtained by subtracting the specific enthalpy of the refrigerant drawn into the second compression element from the specific enthalpy of the refrigerant discharged from the second compression element, or so as to approach this ratio. The control by this water distribution quantity control unit may otherwise involve, for example, adjusting the ratio between the quantity of water flowing through the first branching water tubes and the quantity of water flowing through the second branching water tubes, so that the water temperature in the outlet of the first heat exchanger in the first branching water tubes and the water temperature in the outlet of the second heat exchanger in the second branching water tubes are substantially equal.

In this refrigeration apparatus, heat exchange for cooling the refrigerant and heating the water can be performed by both the first heat exchanger and the second heat exchanger, and flow rate control for improving the coefficient of performance of the refrigeration apparatus can be performed automatically.

A refrigeration apparatus according to a fourth aspect of the present invention is the refrigeration apparatus according to any of the first through third aspects of the present invention, wherein the second refrigerant tubes have a third refrigerant tube for connecting the second heat exchanger and the main expansion mechanism. The refrigeration apparatus further comprises a fourth refrigerant tube for connecting the evaporator and an intake side of the first compression element, a third heat exchanger for performing heat exchange between the refrigerant flowing through the third refrigerant tube and the refrigerant flowing through the fourth refrigerant tube, a third heat exchange bypass tube for connecting one end and another end of a portion of the third refrigerant tube that passes through the third heat exchanger, and a heat exchanger switching mechanism capable of switching between a state in which refrigerant flows through the portion of the third refrigerant tube that passes through the third heat exchanger, and a state in which refrigerant flows through the third heat exchange bypass tube.

In this refrigeration apparatus, through heat exchange in the third heat exchanger, the coefficient of performance can be improved by raising the degree of supercooling of the refrigerant headed to the main expansion mechanism. Furthermore, through heat exchange in the third heat exchanger, the refrigerant drawn into the first compression element can be subjected to an appropriate amount of superheating, liquid compression in the first compression element can be suppressed, and the discharge temperature can be increased to keep the resulting water temperature high.

A refrigeration apparatus according to a fifth aspect of the present invention is the refrigeration apparatus according to the fourth aspect of the present invention, further comprising temperature sensory units and a heat exchange quantity control unit. The temperature sensory units sense at least the air temperature surrounding the evaporator or the discharged refrigerant temperature of at least the first compression element or the second compression element. The heat exchange quantity control unit controls the heat exchanger switching mechanism and increases the quantity of refrigerant flowing through the portion of the third refrigerant tube that passes through the third heat exchanger when the following condition is fulfilled: the air temperature is higher than a predetermined high-temperature air temperature when the value sensed by the temperature sensory units is an air temperature, or the refrigerant temperature is lower than a predetermined low-temperature refrigerant temperature when the value sensed by the temperature sensory units is a refrigerant temperature.

In this refrigeration apparatus, the quantity of refrigerant flowing through the portion of the third refrigerant tube that passes through the third heat exchanger can be increased even in cases in which it appears that the air temperature surrounding the evaporator could increase or that the temperature of the refrigerant discharged from the compression element could decrease.

It is thereby possible to increase the degree of supercooling of the refrigerant headed to the main expansion mechanism, and to improve the coefficient of performance.

Since the refrigerant drawn into the first compression element can be subjected to the appropriate degree of superheating, it is possible to impede liquid compression from occurring in the first compression element.

Furthermore, since the degree of superheating of the refrigerant drawn into the first compression element can be increased, it is possible to conform to cases in which the temperature required in the radiator is high.

A refrigeration apparatus according to a sixth aspect of the present invention is the refrigeration apparatus according to any of the first through third aspects of the present invention, wherein the second refrigerant tubes have a third refrigerant tube connecting the second heat exchanger and the main expansion mechanism. The refrigeration apparatus further comprises a branching expansion mechanism, a fifth refrigerant tube, sixth refrigerant tubes, and a fourth heat exchanger. The branching expansion mechanism depressurizes refrigerant. The fifth refrigerant tube branches off from the third refrigerant tube and extends to the branching expansion mechanism. The sixth refrigerant tubes extend from the branching expansion mechanism to the first refrigerant tube. The fourth heat exchanger performs heat exchange between refrigerant flowing through the third refrigerant tube and refrigerant flowing through the sixth refrigerant tubes.

With this refrigeration apparatus, it is possible to improve the coefficient of performance by raising the degree of supercooling of the refrigerant heading to the branching expansion mechanism.

When the temperature of the refrigerant being mixed in from the sixth refrigerant tubes is lower than the temperature of the refrigerant flowing through the first refrigerant tube, it is also possible to suppress excessive increases in the discharged refrigerant temperature of the second compression element.

Furthermore, the quantity of refrigerant passing through the second heat exchanger can be increased.

A refrigeration apparatus according to a seventh aspect of the present invention is the refrigeration apparatus according to the sixth aspect of the present invention, further comprising temperature sensory units and a branched quantity control unit. The temperature sensory units sense at least the air temperature surrounding the evaporator or the discharged refrigerant temperature of at least the first compression element or the second compression element. The branched quantity control unit controls the branching expansion mechanism and increases the quantity of refrigerant passing through when the following condition is fulfilled: the air temperature is lower than a predetermined low-temperature air temperature when the value sensed by the temperature sensory units is an air temperature, or the refrigerant temperature is higher than a predetermined high-temperature refrigerant temperature when the value sensed by the temperature sensory units is a refrigerant temperature. The control by the branched quantity control unit for increasing the quantity of refrigerant passing through the branching expansion mechanism herein includes control for creating a flow from conditions of a flow rate of zero (no flow), for example.

With this refrigeration apparatus, even in cases in which the temperature of the refrigerant discharged from the first compression element or the second compression element will presumably increase or cases in which the air temperature surrounding the evaporator decreases, excessive increases in the discharged refrigerant temperature of the second compression element can be suppressed by increasing the quantity of refrigerant passing through the branching expansion mechanism, and it is possible to improve the reliability of the first compression element or the second compression element.

A refrigeration apparatus according to an eighth aspect of the present invention is the refrigeration apparatus according to the sixth or seventh aspect of the present invention, further comprising a water temperature sensory unit, a first refrigerant temperature sensory unit, and a refrigerant distribution quantity control unit. The water temperature sensory unit senses the temperature of water flowing through any position in the water tube system. The first refrigerant temperature sensory unit senses the temperature of refrigerant passing through the first refrigerant tube. The refrigerant distribution quantity control unit controls the branching expansion mechanism and increases the quantity of refrigerant passing through when the difference between the temperature sensed by the water temperature sensory unit and the temperature sensed by the first refrigerant temperature sensory unit is less than a predetermined value.

With this refrigeration apparatus, even when the water's effect of cooling the refrigerant flowing through the first refrigerant tube is insufficient, it is possible to improve the coefficient of performance of the refrigeration cycle by causing the sixth refrigerant tubes to converge and thereby lowering the temperature of the refrigerant passing through the first refrigerant tube.

A refrigeration apparatus according to a ninth aspect of the present invention is the refrigeration apparatus according to any of the first through third aspects of the present invention, wherein the second refrigerant tubes have a third refrigerant tube connecting the second heat exchanger and the main expansion mechanism. The refrigeration apparatus further comprises a branching expansion mechanism, a fourth refrigerant tube, a third heat exchanger, a fifth refrigerant tube, sixth refrigerant tubes, and a fourth heat exchanger. The branching expansion mechanism depressurizes refrigerant. The fourth refrigerant tubes connect the evaporator and an intake side of the first compression element. The third heat exchanger performs heat exchange between refrigerant flowing through the third refrigerant tube and refrigerant flowing through the fourth refrigerant tubes. The fifth refrigerant tube branches off from the third refrigerant tube and extends to the branching expansion mechanism. The sixth refrigerant tubes connect the branching expansion mechanism and the first refrigerant tube. The fourth heat exchanger performs heat exchange between refrigerant flowing through the third refrigerant tube and refrigerant flowing through the sixth refrigerant tubes.

With this refrigeration apparatus, it is possible to raise the degree of supercooling of the refrigerant heading to the branching expansion mechanism and improve the coefficient of performance, and to apply the appropriate amount of heating to the refrigerant drawn into the first compression element and prevent liquid compression in the first compression element and/or cool the refrigerant flowing through the third refrigerant tube.

A refrigeration apparatus according to a tenth aspect of the present invention is the refrigeration apparatus according to the ninth aspect of the present invention, further comprising temperature sensory units and a branched heat quantity control unit. The temperature sensory units sense at least the air temperature surrounding the evaporator or the discharged refrigerant temperature of at least the first compression element or the second compression element. The branched heat quantity control unit controls the branching expansion mechanism and increases the quantity of refrigerant passing through when the following condition is fulfilled: the air temperature is lower than a predetermined low-temperature air temperature when the value sensed by the temperature sensory units is an air temperature, or the refrigerant temperature is higher than a predetermined high-temperature refrigerant temperature when the value sensed by the temperature sensory units is a refrigerant temperature. The control by the branched quantity control unit for increasing the quantity of refrigerant passing through the branching expansion mechanism herein includes control for creating a flow from conditions of a flow rate of zero (no flow), for example.

With this refrigeration apparatus, even in cases in which the temperature of the refrigerant discharged from the compression element will presumably increase or cases in which the air temperature surrounding the evaporator decreases, excessive increases in the discharged refrigerant temperature of the second compression element can be suppressed by increasing the quantity of refrigerant passing through the branching expansion mechanism, and it is possible to improve the reliability of the second compression element.

A refrigeration apparatus according to an eleventh aspect of the present invention is the refrigeration apparatus according to the ninth or tenth aspect of the present invention, further comprising a first heat exchange bypass tube and a bypass switching mechanism. The first heat exchange bypass tube connects one end and another end of the portion of the first refrigerant tube that passes through the first heat exchanger. The bypass switching mechanism is capable of switching between a state in which refrigerant flows through the portion of the first refrigerant tube that passes through the first heat exchanger, and a state in which refrigerant flows through the first heat exchange bypass tube.

With this refrigeration apparatus, in the first heat exchanger, the switching of the bypass switching mechanism makes it possible to switch between a state of allowing and a state of not allowing the passage of refrigerant in the heat exchange bypass tube, and also to adjust the usage condition of the first heat exchanger.

A refrigeration apparatus according to a twelfth aspect of the present invention is the refrigeration apparatus according to the eleventh aspect of the present invention, further comprising temperature sensory units and a bypass control unit. The temperature sensory units sense at least the air temperature surrounding the evaporator or the discharged refrigerant temperature of at least the first compression element or the second compression element. The bypass control unit controls the bypass switching mechanism and increases the quantity of refrigerant flowing through the portion of the first refrigerant tube that passes through the first heat exchanger when the following condition is fulfilled: the air temperature is higher than a predetermined high-temperature air temperature when the value sensed by the temperature sensory units is an air temperature, or the refrigerant temperature is lower than a predetermined low-temperature refrigerant temperature when the value sensed by the temperature sensory units is a refrigerant temperature. The control by the bypass control unit for increasing the quantity of refrigerant passing through the portion of the first refrigerant tube herein includes control for creating a flow from conditions of a flow rate of zero (no flow), for example.

With this refrigeration apparatus, even in cases in which the temperature of the refrigerant discharged from the compression element will presumably be low or cases in which the air temperature surrounding the evaporator has increased, the degree of superheating of the refrigerant drawn into the second compression element can be raised by reducing the quantity of refrigerant flowing through the portion of the first refrigerant tube that passes through the first heat exchanger, and it is possible to comply with a high temperature requirement in the radiator.

A refrigeration apparatus according to a thirteenth aspect of the present invention is the refrigeration apparatus according to any of the ninth through twelfth aspects of the present invention, further comprising a water temperature sensory unit, a first refrigerant temperature sensory unit, and a water-correspondent refrigerant quantity control unit. The water temperature sensory unit senses the temperature of water flowing through any position in the water tube system. The first refrigerant temperature sensory unit senses the temperature of refrigerant passing through the first refrigerant tube. The water-correspondent refrigerant quantity control unit controls the branching expansion mechanism and increases the quantity of refrigerant passing through when the difference between the temperature sensed by the water temperature sensory unit and the temperature sensed by the first refrigerant temperature sensory unit is less than a predetermined value.

With this refrigeration apparatus, even when the water's effect of cooling the refrigerant flowing through the first refrigerant tube is insufficient, it is possible to improve the coefficient of performance of the refrigeration cycle by causing the refrigerant passing through the sixth refrigerant tubes to mix, thereby lowering the temperature of the refrigerant flowing through the first refrigerant tube.

A refrigeration apparatus according to a fourteenth aspect of the present invention is the refrigeration apparatus according to any of the first through thirteenth aspects of the present invention, further comprising a first drive unit for driving the first compression element, and a second drive unit for driving the second compression element independently of the first compression element.

With this refrigeration apparatus, since the capacity of the first compression element and the capacity of the second compression element can be adjusted so as to be different, during control for mixing the water flowing through the first branching water tube and the water flowing through the second branching water tube and attempting to bring the temperature of the water flowing through the output water tube to a target temperature, the coefficient of performance can be made satisfactory and the effect of minimizing the compression work can be further improved by separately adjusting the capacity of the first compression element and the capacity of the second compression element.

A refrigeration apparatus according to a fifteenth aspect of the present invention is the refrigeration apparatus according to any of the first through thirteenth aspects of the present invention, wherein the first compression element and the second compression element have a shared rotating shaft for performing compression work by rotatably driving each of the compression elements.

With this refrigeration apparatus, vibrations and/or fluctuations in torque load can be suppressed by driving the compression elements while causing their centrifugal forces to cancel each other out.

A refrigeration apparatus according to a sixteenth aspect of the present invention is the refrigeration apparatus according to any of the first through fifteenth aspects of the present invention, wherein the active refrigerant is carbon dioxide.

In this refrigeration apparatus, with carbon dioxide in a supercritical state near a critical point, the density of the refrigerant can be changed dramatically merely by slightly changing the refrigerant pressure. Therefore, the efficiency of the refrigeration apparatus can be improved by a small amount of compression work.

### <Advantageous Effects of Invention>

As stated in the above descriptions, the following effects are achieved according to the present invention.

In the first aspect, the refrigerant heading from the first compression element toward the second compression element is cooled to reliably improve compression efficiency, heat exchanging which can raise the water temperature can be reliably performed by both the first heat exchanger and the second heat exchanger, and the coefficient of performance of the refrigeration apparatus can be improved.

In the second aspect, it is possible for the water to be heated efficiently.

In the third aspect, flow rate control for improving the coefficient of performance of the refrigeration apparatus can be performed automatically.

In the fourth aspect, it is possible to improve the coefficient of performance, to suppress liquid compression in the first compression element, and to increase the discharge temperature to keep the resulting water temperature high.

In the fifth aspect, it is possible to increase the degree of supercooling of the refrigerant headed to the main expansion mechanism, and to improve the coefficient of performance.

In the sixth aspect, it is possible to improve the coefficient of performance by raising the degree of supercooling of the refrigerant heading to the branching expansion mechanism.

In the seventh aspect, it is possible to improve the reliability of the first compression element or the second compression element.

In the eighth aspect, even when the water's effect of cooling the refrigerant flowing through the first refrigerant tube is insufficient, it is possible to improve the coefficient of performance of the refrigeration cycle.

In the ninth aspect, it is possible to improve the coefficient of performance, and to prevent liquid compression in the first compression element and/or cool the refrigerant flowing through the third refrigerant tube.

In the tenth aspect, even in cases in which the temperature of the refrigerant discharged from the compression element will presumably increase or cases in which the air temperature surrounding the evaporator decreases, it is possible to improve the reliability of the second compression element.

In the eleventh aspect, it is possible to switch between a state of allowing and a state of not allowing the passage of refrigerant in the heat exchange bypass tube, and also to adjust the usage condition.

In the twelfth aspect, even in cases in which the temperature of the refrigerant discharged from the compression element will presumably be low or cases in which the air temperature surrounding the evaporator has increased, it is possible to comply with a high temperature requirement in the radiator.

In the thirteenth aspect, even when the water's effect of cooling the refrigerant flowing through the first refrigerant tube is insufficient, it is possible to improve the coefficient of performance of the refrigeration cycle.

In the fourteenth aspect, the coefficient of performance can be made satisfactory and the effect of minimizing the compression work can be further improved.

In the fifteenth aspect, the occurrence of vibrations and/or fluctuations in torque load can be suppressed by driving the compression elements while causing their centrifugal forces to cancel each other out.

In the sixteenth aspect, the efficiency of the refrigeration apparatus can be improved by a small amount of compression work.

### BRIEF DESCRIPTION OF THE DRAWINGS

FIG. 1 is a schematic structural diagram of an air-conditioning apparatus as an embodiment of the refrigeration apparatus according to the first embodiment of the present invention.
FIG. 2 is a pressure-enthalpy graph representing the refrigeration cycle of the air-conditioning apparatus according to the first embodiment.
FIG. 3 is a temperature-entropy graph representing the refrigeration cycle of the air-conditioning apparatus according to the first embodiment.
FIG. 4 is a schematic structural diagram of an air-conditioning apparatus according to Modification 1 of the first embodiment.
FIG. 5 is a schematic structural diagram of an air-conditioning apparatus according to Modification 2 of the first embodiment.

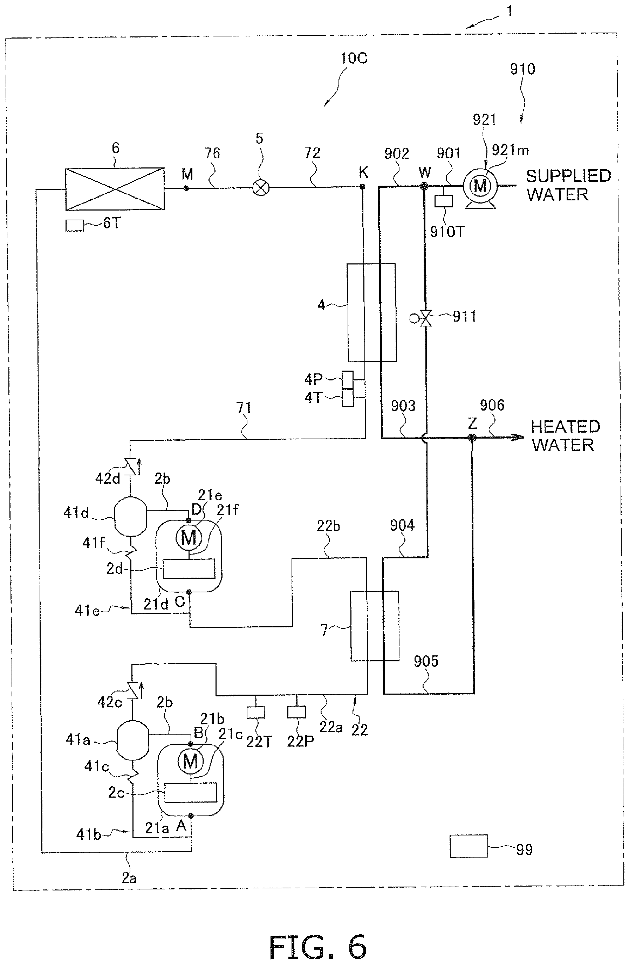

FIG. 6 is a schematic structural diagram of an air-conditioning apparatus according to Modification 3 of the first embodiment.
FIG. 7 is a schematic structural diagram of an air-conditioning apparatus according to Modification 7 of the first embodiment.
FIG. 8 is a schematic structural diagram of an air-conditioning apparatus as an embodiment of the refrigeration apparatus according to the second embodiment of the present invention.
FIG. 9 is a pressure-enthalpy graph representing the refrigeration cycle of the air-conditioning apparatus according to the second embodiment.
FIG. 10 is a temperature-entropy graph representing the refrigeration cycle of the air-conditioning apparatus according to the second embodiment.
FIG. 11 is a schematic structural diagram of an air-conditioning apparatus according to Modification 1 of the second embodiment.
FIG. 12 is a schematic structural diagram of an air-conditioning apparatus according to Modification 5 of the second embodiment.
FIG. 13 is a schematic structural diagram of an air-conditioning apparatus as an embodiment of a refrigeration apparatus according to the third embodiment of the present invention.
FIG. 14 is a pressure-enthalpy graph representing the refrigeration cycle of an air-conditioning apparatus according to the third embodiment.
FIG. 15 is a temperature-entropy graph representing the refrigeration cycle of an air-conditioning apparatus according to the third embodiment.
FIG. 16 is a schematic structural diagram of an air-conditioning apparatus according to Modification 1 of the third embodiment.
FIG. 17 is a schematic structural diagram of an air-conditioning apparatus according to Modification 4 of the third embodiment.
FIG. 18 is a schematic structural diagram of an air-conditioning apparatus as an embodiment of a refrigeration apparatus according to the fourth embodiment of the present invention.
FIG. 19 is a pressure-enthalpy graph representing the refrigeration cycle of an air-conditioning apparatus according to the fourth embodiment.
FIG. 20 is a temperature-entropy graph representing the refrigeration cycle of an air-conditioning apparatus according to the fourth embodiment.
FIG. 21 is a schematic structural diagram of an air-conditioning apparatus according to Modification 1 of the fourth embodiment.
FIG. 22 is a schematic structural diagram of an air-conditioning apparatus according to Modification 2 of the fourth embodiment.
FIG. 23 is a schematic structural diagram of an air-conditioning apparatus according to Modification 3 of the fourth embodiment.
FIG. 24 is a schematic structural diagram of an air-conditioning apparatus according to Modification 4 of the fourth embodiment.
FIG. 25 is a schematic structural diagram of an air-conditioning apparatus according to Modification 8 of the fourth embodiment.

### DESCRIPTION OF EMBODIMENTS

### <1> First Embodiment

### <1-1> Configuration of Air-Conditioning Apparatus

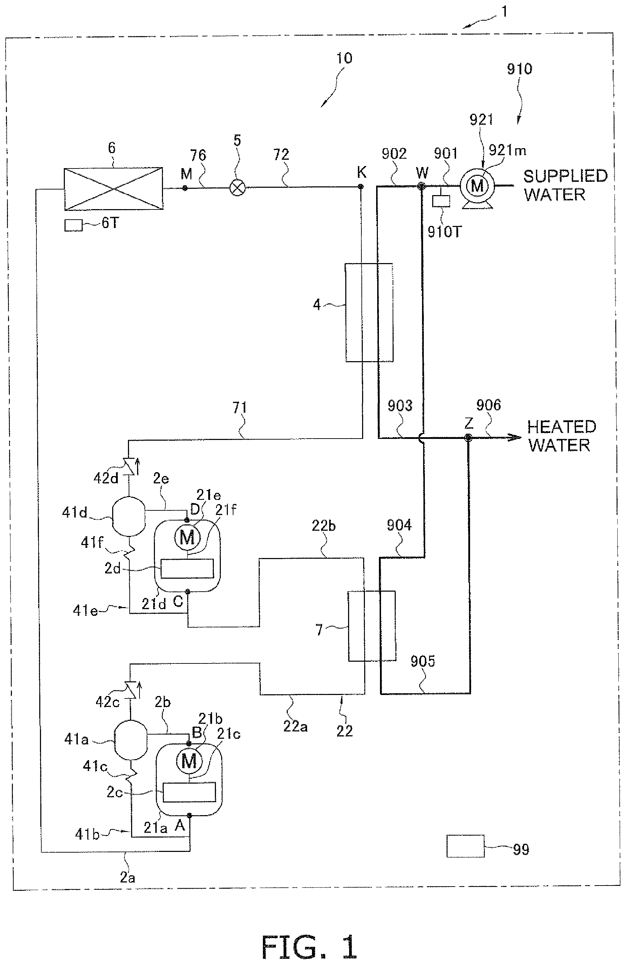

FIG. 1 is a schematic structural diagram of a water heater 1 as an embodiment of the refrigeration apparatus according to the present invention. The water heater 1 is an apparatus for producing heated water by using refrigerant that operates in a supercritical range (carbon dioxide in this case) to perform a two-stage compression-type refrigeration cycle.

The water heater 1 has a water circuit 910 and a refrigerant circuit 10.

### (Water Circuit)

The water circuit 910 has a water inlet tube 901 for leading water supplied from the exterior to a water branching point W, heat source water tubes 902, 903 and intermediate water tubes 904, 905 extending from the branching point W, and a water outlet tube 906 leading out to the exterior from a convergent point Z where the heat source water tubes 902, 903 and the intermediate water tubes 904, 905 converge, as shown in FIG. 1.

A pump 921 capable of adjusting the quantity of water passing through is provided to the water inlet tube 901. This pump 921 is provided with a motor 921m, the rotational speed is adjusted by a control unit 99, and the flow rate of the pump is adjusted. The water circuit 910 is also provided with a water temperature sensor 910T for detecting the temperature of the water passing through the water inlet tube 901. Through the water temperature sensor 910T, the control unit 99 can perceive the temperature of the supplied water, the control unit 99 perceives the difference from the output water temperature requested by the user, and a refrigeration cycle of the refrigerant circuit 10 is adjusted.

The heat source water tube 902 extends from the branching point W to a heat source-side heat exchanger 4 of the refrigerant circuit 10, described hereinafter. The heat source water tube 903 extends so as to lead water flowing out of the heat source-side heat exchanger 4 to the convergent point Z. Thus, the water flowing through the heat source water tubes 902, 903 is warmed in the heat source-side heat exchanger 4 by heat exchange with the refrigerant flowing through the refrigerant circuit 10, and heated water is produced. A tube configuration is created so that the refrigerant and water flow opposite each other in an intercooler 7, and the heat exchange efficiency is improved.

The intermediate water tube 904 extends from the branching point W to the intercooler 7 of the refrigerant circuit 10, described hereinafter. The intermediate water tube 905 extends so as to lead the water flowing out of the intercooler 7 to the convergent point Z. Thus, the water flowing through the intermediate water tubes 904, 905 is warmed in the intercooler 7 by heat exchange with the refrigerant flowing through the refrigerant circuit 10, and heated water is produced. A tube configuration is created so that the refrigerant and water flow opposite each other in the heat source-side heat exchanger 4, and the heat exchange efficiency is improved. Since the refrigerant temperature in the intermediate water tubes 904, 905, which is the target of heat exchange, is lower than the refrigerant temperature in the heat source-side heat exchanger 4, the intermediate water tubes 904, 905 are designed to be smaller in diameter than the heat source water tubes 902, 903 in order to ensure that the water heating will take place primarily in the heat source-side heat exchanger 4.

Hot water which has been warmed in the heat source water tubes 902, 903 and in the intermediate water tubes 904, 905 and mixed at the convergent point Z is then supplied to the user through the water outlet tube 906.

### (Refrigerant Circuit)

The refrigerant circuit 10 has primarily a low-stage compression element 2c, a high-stage compression element 2d, the heat source-side heat exchanger 4, an expansion mechanism 5, a usage-side heat exchanger 6, an intermediate refrigerant tube 22, an intercooler 7, connection tubes 71, 72, 76 or the like connecting these components, and a usage-side temperature sensor 6T.

In the present embodiment, the low-stage compression element 2c and the high-stage compression element 2d compress the refrigerant sequentially in two stages.

The low-stage compression element 2c has a hermetically sealed structure in which a compressor drive motor 21b and a drive shaft 21c are housed within a casing 21a. The compressor drive motor 21b is linked to the drive shaft 21c. This drive shaft 21c is linked to the compression element 2c. The compression element 2c is a rotary-type, scroll-type, or another type of positive displacement compression element in the present embodiment. The low-stage compression element 2c draws refrigerant in from an intake tube 2a, compresses the drawn-in refrigerant, and discharges the refrigerant toward the intermediate refrigerant tube 22. The intermediate refrigerant tube 22 connects the discharge side of the low-stage compression element 2c and the intake side of the high-stage compression element 2d via the intercooler 7. A discharge tube 2b is a refrigerant tube for feeding the refrigerant discharged from the low-stage compression element 2c to the high-stage compression element 2d via the intercooler 7, and the discharge tube 2b is provided with a non-return mechanism 42c and a mechanism for separating the refrigerant from refrigeration oil which accompanies the refrigerant discharged from the low-stage compression element 2c and returning the refrigeration oil to the intake side of the low-stage compression element 2c. The mechanism for returning the refrigeration oil has primarily an oil separator 41a for separating the refrigerant from the refrigeration oil accompanying the refrigerant discharged from the low-stage compression element 2c, and an oil return tube 41b which is connected to the oil separator 41a and which returns the refrigeration oil separated from the refrigerant to the intake tube 2a of the low-stage compression element 2c. The oil return tube 41b is provided with a depressurization mechanism 41c for depressurizing the refrigeration oil flowing through the oil return tube 41b. A capillary tube is used as the depressurization mechanism 41c in the present embodiment. The non-return mechanism 42c is a mechanism for allowing the flow of refrigerant from the discharge side of the low-stage compression element 2c to the intercooler 7 and blocking the flow of refrigerant from the intercooler 7 to the discharge side of the low-stage compression element 2c, and a non-return valve is used in the present embodiment.

The high-stage compression element 2d is similar to the low-stage compression element 2c, and has a hermetically sealed structure in which a compressor drive motor 21e and a drive shaft 21f are housed within a casing 21d. The compressor drive motor 21e is linked to the drive shaft 21f. This drive shaft 21f is linked to the compression element 2d. The compression element 2d is a rotary-type, scroll-type, or another type of positive displacement compression element in the present embodiment. The high-stage compression element 2d draws refrigerant in from the intermediate refrigerant tube 22, compresses the drawn-in refrigerant, and discharges the refrigerant toward a discharge tube 2e. The discharge tube 2e connects the discharge side of the high-stage compression element 2d and the heat source-side heat exchanger 4. The discharge tube 2e is provided with a non-return mechanism 42d and a mechanism for separating the refrigerant from refrigeration oil which accompanies the refrigerant discharged from the high-stage compression element 2d and returning the refrigeration oil to the intake side of the high-stage compression element 2d. The mechanism for returning the refrigeration oil has primarily an oil separator 41d for separating the refrigerant from the refrigeration oil accompanying the refrigerant discharged from the high-stage compression element 2d, and an oil return tube 41e which is connected to the oil separator 41d and which returns the refrigeration oil separated from the refrigerant to the intermediate refrigerant tube 22, which is on the intake side of the high-stage compression element 2d. The oil return tube 41e is provided with a depressurization mechanism 41f for depressurizing the refrigeration oil flowing through the oil return tube 41e. A capillary tube is used as the depressurization mechanism 41f in the present embodiment. The non-return mechanism 42d is a mechanism for allowing the flow of refrigerant from the discharge side of the high-stage compression element 2d to the heat source-side heat exchanger 4 and blocking the flow of refrigerant from the heat source-side heat exchanger 4 to the discharge side of the high-stage compression element 2d, and a non-return valve is used in the present embodiment.

That is, the two compression elements 2c, 2d are connected to each other in series and are linked to their respective individual drive shafts 21c, 21f, and the two compression elements 2c, 2d have two-stage compression structures in which they are rotatably driven individually by respective compressor drive motors 21b, 21e.

The intercooler 7 warms the water flowing through the intermediate water tubes 904, 905 by the heat of the refrigerant flowing through the intermediate refrigerant tube 22, and cools the refrigerant flowing through the intermediate refrigerant tube 22 by the water flowing through the intermediate water tubes 904, 905. The degree of superheating of the refrigerant drawn into the high-stage compression element 2d can thereby be reduced, and the temperature of the refrigerant discharged from the high-stage compression element 2d is prevented from increasing excessively. The refrigeration capacity can also be improved because the density of the refrigerant drawn into the high-stage compression element 2d is increased by lowering the temperature of the refrigerant flowing through the intermediate refrigerant tube 22 in this manner.

The heat source-side heat exchanger 4 is a heat exchanger which has air as a heat source and functions as a radiator of refrigerant. The heat source-side heat exchanger 4 is connected at one end to the discharge side of the high-stage compression element 2d via the connection tube 71 and the non-return mechanism 42, and is connected at the other end to the expansion mechanism 5 via the connection tube 72. In this heat source-side heat exchanger 4, the water flowing through the heat source water tubes 902, 903 is heated by the refrigerant heading from the connection tube 71 to the connection tube 72, and the refrigerant heading from the connection tube 71 to the connection tube 72 is cooled by the water flowing through the heat source water tubes 902, 903.

The expansion mechanism 5 is connected at one end to the connection tube 72, and is connected at the other end to the usage-side heat exchanger 6 via the connection tube 76. The expansion mechanism 5 is a mechanism for depressurizing the refrigerant, and an electric expansion valve is used in the present embodiment. In the present embodiment, the expansion mechanism 5 depressurizes the high-pressure refrigerant cooled in the heat source-side heat exchanger 4 nearly to the saturation pressure of the refrigerant before feeding the refrigerant to the usage-side heat exchanger 6.

The usage-side heat exchanger 6 is a heat exchanger which functions as an evaporator of refrigerant. The usage-side heat exchanger 6 is connected at one end to the expansion mechanism 5 via the connection tube 76, and is connected at the other end to the intake side of the low-stage compression element 2c via the intake tube 2a. Though not shown in the diagram, the usage-side heat exchanger 6 is supplied with water and/or air as a heating source for performing heat exchange with the refrigerant flowing through the usage-side heat exchanger 6.

The usage-side temperature sensor 6T detects the temperature of the water and/or air supplied as a heating source in order to perform heat exchange with the refrigerant flowing through the usage-side heat exchanger 6 described above.

As described above, the water heater 1 is provided with a control unit 99 which perceives the temperature sensed by the usage-side temperature sensor 6T, and which controls the actions of the low-stage compression element 2c, the high-stage compression element 2d, the expansion mechanism 5, the pump 921, and other components constituting the water heater 1.

### <1 -2> Action of Air-Conditioning Apparatus

Next, the action of the water heater 1 of the present embodiment will be described using FIGS. 1,2 and 3.

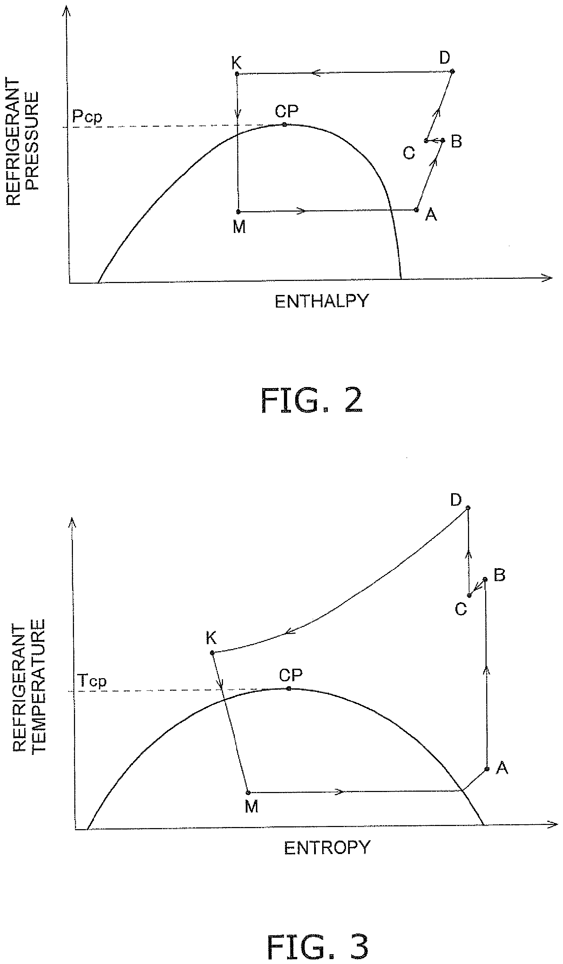

Herein, FIG. 2 is a pressure-enthalpy graph representing the refrigeration cycle, and FIG. 3 is a temperature-entropy graph representing the refrigeration cycle.

The states of the refrigerant at the points indicated by A, B, C, D, K, and M in the refrigerant circuit 10 of FIG. 1 correspond to the same points in the pressure-enthalpy graph shown in FIG. 2 and the temperature-entropy graph shown in FIG. 3.

In this refrigeration cycle, the refrigerant flowing through the intermediate refrigerant tube 22 is cooled by the refrigerant flowing through the intermediate water tubes 904, 905 of the water circuit 910 when passing through the intercooler 7 (refer to point B → point C in FIGS. 2 and 3).

### (Target Capacity Output Control)

In this type of refrigeration cycle, the control unit 99 performs target capacity output control as follows.

First, the control unit 99 receives an input value of output water temperature and an input value of a required output water quantity from the user via a controller or the like (not shown). The control unit 99 controls the flow rate of water by controlling the rotational speed of the motor 921m of the pump 921 on the basis of the input value of the required output water quantity.

The control unit 99 then perceives the water temperature detected by the water temperature sensor 910T and the flow rate controlled by the motor 921m of the pump 921, and calculates emitted heat quantity required for the refrigerant supplied to the heat source-side heat exchanger 4. Based on this required emitted heat quantity, the control unit 99 then calculates the target discharge pressure for the pressure of the refrigerant discharged from the high-stage compression element 2d.

A case of a target discharge pressure being the target value in the target capacity output control is herein described as an example, but instead of the target discharge pressure, target values of the discharged refrigerant pressure and the discharged refrigerant temperature may be established so that the value obtained by multiplying the discharged refrigerant temperature by the discharged refrigerant pressure is within a predetermined range. This is because in cases in which the load has changed, the density of the discharged refrigerant decreases when the degree of superheating of the drawn-in refrigerant is high; therefore, even if it is possible to maintain the temperature of the refrigerant discharged from the high-stage compression element 2d, it becomes impossible to guarantee the emitted heat quantity required in the heat source-side heat exchanger 4.

Next, based on the temperature sensed by the usage-side temperature sensor 6T, the control unit 99 establishes a target evaporation temperature and a target evaporation pressure (a pressure equal to or less than the critical pressure). This setting of the target evaporation pressure is performed every time the temperature sensed by the usage-side temperature sensor 6T changes.

Based on this target evaporation temperature value, the control unit 99 performs superheat degree control so that the degree of superheating of the refrigerant drawn in by the low-stage compression element 2c is a target value x (degree of superheating target value) of 5°C or less.

The control unit 99 then controls the low-stage compression element 2c so as to raise the refrigerant pressure and refrigerant temperature while causing isentropic change for maintaining the entropy value at the degree of superheating established in this manner, and refrigerant is discharged to the intermediate refrigerant tube 22. In the intercooler 7 provided to the intermediate refrigerant tube 22, heat exchange is performed while the water and refrigerant flow against each other, the refrigerant is cooled by the water flowing through the intermediate water tubes 904, 905, and the water flowing through the intermediate water tubes 904, 905 is heated. Thus, the refrigerant flowing through the intermediate refrigerant tube 22 is cooled in the intercooler 7 and drawn into the high-stage compression element 2d. In the high-stage compression element 2d, refrigerant is discharged at a pressure exceeding the critical pressure due to the operating capacity being controlled by controlling the rotational speed. Having been increased in temperature by being further compressed by the high-stage compression element 2d in this manner, the refrigerant is fed to the heat source-side heat exchanger 4. In the heat source-side heat exchanger 4, heat exchange is performed while the high-temperature, high-pressure refrigerant in a supercritical state and the water flow against each other, and water having the target output water temperature is obtained.

In this heat radiation process in the heat source-side heat exchanger 4, since the refrigerant is in a supercritical state, the refrigerant temperature continuously decreases while the pressure is being changed such that the refrigerant is maintained at the target discharge pressure as an isobaric change. The refrigerant flowing through the heat source-side heat exchanger 4 has a temperature equal to or greater than the temperature of the water supplied as a heating target through the heat source water tubes 902, 903, and the refrigerant is cooled to a value y near the water supplied as a heating target. The value of y changes due to the supplied quantity being controlled by the motor 921m of the pump 921.

The refrigerant cooled in the heat source-side heat exchanger 4 in this manner is depressurized to the target evaporation pressure (a pressure equal to or less than the critical pressure) by the expansion mechanism 5, and the refrigerant flows into the usage-side heat exchanger 6.

The refrigerant flowing through the usage-side heat exchanger 6 absorbs heat from the water and/or air supplied as a heating source, whereby the dryness of the refrigerant is progressively improved while isobaric-isothermal change is conducted such that the target evaporation temperature and the target evaporation pressure are maintained. The control unit 99 then controls the quantity supplied by a heating source supply device (not shown) (a pump in the case of water, and a fan or the like in the case of air) so that the degree of superheating reaches the degree of superheating target value.

When performing control in this manner, the control unit 99 calculates the value of x and the value of y so that the coefficient of performance (COP) in the refrigeration cycle will be as high as possible, and performs the target capacity output control described above. When calculating the value of x and the value of y which yield the best coefficient of performance, the control unit 99 performs the calculation on the basis of the properties (a Mollier diagram or the like) of carbon dioxide as the active refrigerant. A condition may be established at which the coefficient of performance can be satisfactorily maintained to a certain extent, and if this condition is met, the value of x and the value of y may be determined such that the compression work will be a smaller value. Another option is to use a precondition that the compression work is suppressed to a predetermined value or lower, and to determine the value of x and the value of y which yield the best coefficient of performance while this precondition is being met.

The relationship between heat radiation quantity control guaranteed in the heat source-side heat exchanger 4 and/or the intermediate refrigerant tube 22 of the refrigerant circuit 10 and flow rate control of the pump 921, which are performed by the control unit 99, includes a large adjustment of the flow rate of the pump 921 of the water circuit 910 or another action when the refrigerant circuit 10 is controlled so that the heat radiation quantity in the heat source-side heat exchanger 4 and/or the intermediate refrigerant tube 22 increases, for example. This relationship between heat radiation quantity control and flow rate control also includes control for minimizing the flow rate of the pump 921 of the water circuit 910 when, conversely, a large heat radiation quantity cannot be achieved in the heat source-side heat exchanger 4 and/or the intermediate refrigerant tube 22. The control unit 99 gives less priority to controlling the output water quantity than to the output water temperature while achieving the output water temperature requested by the user.

### (Characteristics of First Embodiment)

The water that has branched off in the branching point W and that flows through the intermediate water tubes 904, 905 is water that has not been heated in the heat source-side heat exchanger 4, and this water has the same temperature as the temperature of the water flowing through the water inlet tube 901. During control performed by the control unit 99, in the refrigerant circuit 10 which uses carbon dioxide as the active refrigerant, degree of superheating control is performed so that the degree of superheating reaches a target value x of 5°C or less, and the compression ratio in the low-stage compression element 2c and the compression ratio in the high-stage compression element 2d are adjusted so as to be equal. Therefore, according to the properties of carbon dioxide in a Mollier diagram, the temperature of the refrigerant flowing through the heat source-side heat exchanger 4 is inevitably higher than the temperature of the refrigerant flowing through the intercooler 7. Thus, in a refrigeration cycle in which the temperature of the refrigerant flowing through the intercooler 7 and the temperature of the refrigerant flowing through the heat source-side heat exchanger 4 are different and the temperature of the refrigerant flowing through the intercooler 7 is the lower of the two, in order to achieve the refrigeration cycle effect by way of the intercooler 7, i.e., effect of cooling the refrigerant drawn into the high-stage compression element 2d, the refrigeration cycle is limited to cases in which the temperature of the water flowing through the intermediate water tubes 904, 905 is lower than the temperature of the refrigerant flowing through the intermediate refrigerant tube 22. Therefore, if the water flowing into the intercooler 7 has already been heated to a certain extent in the heat source-side heat exchanger 4 before flowing into the intercooler 7, not only is this effect of cooling the refrigerant drawn into the high-stage compression element 2d lessened, but the reverse effect will sometimes occur when the temperature of the water flowing through the intermediate water tubes 904, 905 is higher than the temperature of the refrigerant flowing through the intermediate refrigerant tube 22. As a countermeasure to this, in the water heater 1 of the present embodiment, the water flowing into the intercooler 7 can be made to flow into the intercooler 7 via the intermediate water tube 904 without taking heat from the exterior after the water has branched off at the branching point W. Therefore, the effect of cooling the refrigerant drawn into the high-stage compression element 2d can be achieved merely due to the temperature of the water flowing through the water inlet tube 901 at least being lower than the temperature of the refrigerant flowing through the intermediate refrigerant tube 22, and it is possible to prevent this effect from lessening or to prevent the reverse effect from occurring due to the water flowing through the intermediate water tubes 904, 905 being heated before flowing into the intercooler 7.

### <1-3> Modification 1

As one example of control by the control unit 99 in the embodiment described above, the following type of control can be performed, for example.

In this example, the design pressure resistance of the low-stage compression element 2c and the high-stage compression element 2d is 12 MPa, and the discharged refrigerant pressure must be maintained at or below this design pressure resistance.

In cases in which the control unit 99 establishes the discharged refrigerant temperature on the basis of the input value of the output water temperature from the user, the target discharge pressure and target discharge temperature are established so as to achieve a refrigerant pressure and refrigerant temperature which are equal to or less than the design pressure described above and which can guarantee a heat radiation quantity of the refrigerant supplied to the heat source-side heat exchanger 4. The target state of the discharged refrigerant thereby converges at one point in a Mollier diagram of the refrigeration cycle which uses carbon dioxide as the active refrigerant.

On the other hand, the target evaporation pressure of the refrigeration cycle is established according to the temperature sensed by the usage-side temperature sensor 6T.

In cases in which a control is performed so that the compression ratio in the low-stage compression element 2c and the compression ratio in the high-stage compression element 2d are equal, the target intermediate pressure flowing through the intermediate refrigerant tube 22 is established according to the above-described relationship between the target discharge pressure and the evaporation pressure.

When the degree of superheating of the refrigerant drawn into the low-stage compression element 2c is set at 5°C, the discharged refrigerant temperature and pressure are established by causing isentropic change in the low-stage compression element 2c. Furthermore, if isentropic change takes place in the high-stage compression element 2d so that the target discharge pressure and target discharge temperature can be achieved, the temperature of the refrigerant drawn into the high-stage compression element 2d is established.

The quantity of cold energy needed to cool the refrigerant discharged from the low-stage compression element 2c until it is drawn into the high-stage compression element 2d is thereby established, and the control unit 99 may control the flow rate of the pump 921 on the basis of the value detected by the water temperature sensor 910T so that this cold energy quantity can be supplied.

The degree of superheating is not limited to 5°C, and can be selected within a range of 0 to 5°C. The temperature of the refrigerant flowing into the expansion mechanism 5 is also adjustable, and the value of x and the value of y may be established so as to yield the best coefficient of performance of the refrigeration cycle while these values are being adjusted.

### <1-4> Modification 2

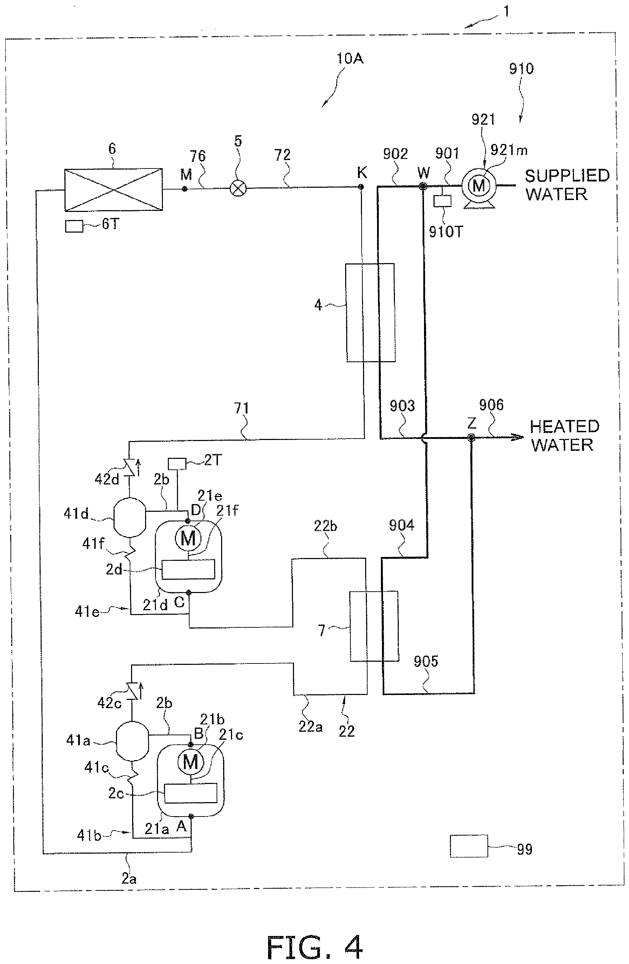

As shown in FIG. 4, for example, a refrigerant circuit 10A may be used which has a discharged refrigerant temperature sensor 2T for sensing the temperature of the refrigerant discharged from the high-stage compression element 2d.

If the temperature detected by this discharged refrigerant temperature sensor 2T is too high, it will not be possible to maintain the reliability of the high-stage compression element 2d, and the control unit 99 may therefore perform control for reducing the flow rate of the pump 921 while reducing the discharged refrigerant temperature.

It is thereby possible to achieve the output water temperature requested by the user while guaranteeing the reliability of the high-stage compression element 2d.

### <1-5> Modification 3

In the embodiment described above, an example was described in which the diameters of the intermediate water tubes 904, 905 are designed to be smaller than the diameters of the heat source water tubes 902, 903.

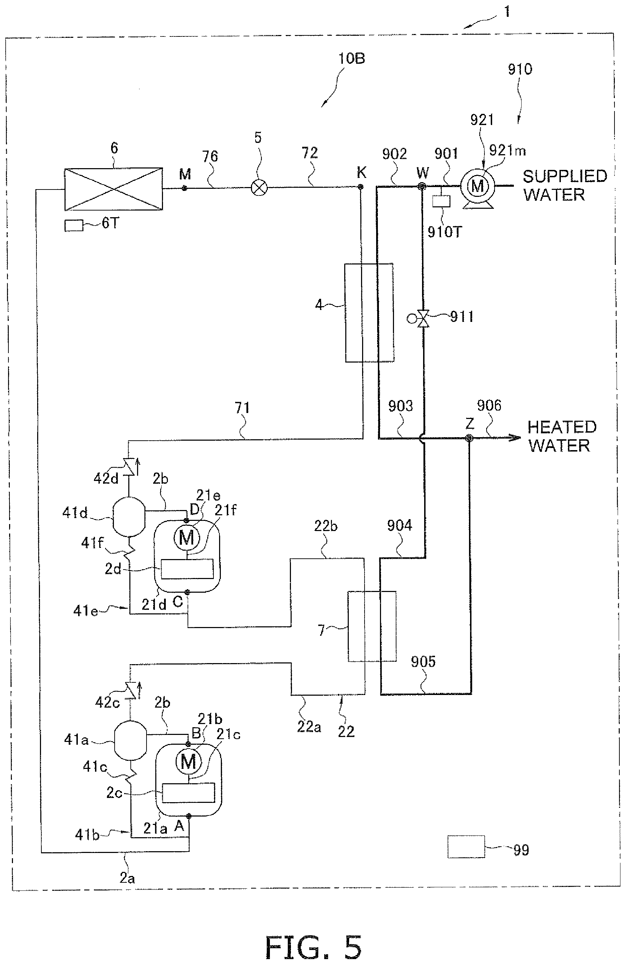

However, the present invention is not limited to this example, and another option is to use a refrigerant circuit 10B provided with a flow rate ratio adjustment mechanism 911 capable of adjusting the ratio between the quantity of water flowing through the intermediate water tubes 904, 905 and the quantity of water flowing through the heat source water tubes 902, 903, as shown in FIG. 5, for example.

For example, the flow rate ratio adjustment mechanism 911 can be provided at an intermediate point in the intermediate water tubes 904, 905. The flow rate ratio can thereby be adjusted even if the diameters of the intermediate water tubes 904, 905 and the diameters of the heat source water tubes 902, 903 are the same.

When the flow rate ratio between the quantity of water flowing through the heat source water tubes 902, 903 and the quantity of water flowing through the intermediate water tubes 904, 905 is adjusted, the control unit 99 may control the flow rate ratio so as to achieve equality between the ratio of the heating amount in the heat source-side heat exchanger 4 and the heating amount in the intercooler 7 as obtained from the Mollier diagram, and the ratio of the quantity of water flowing through the heat source water tubes 902, 903 and the quantity of water flowing through the intermediate water tubes 904, 905, for example. The heating amount in the intercooler 7 in this case can be perceived according to an intermediate specific enthalpy (point B → point C in the Mollier diagram) obtained by subtracting the specific enthalpy of the refrigerant discharged from the low-stage compression element 2c from the specific enthalpy of the refrigerant drawn into the high-stage compression element 2d. The heating amount in the heat source-side heat exchanger 4 can be perceived according to a heat source specific enthalpy (point D → point K in the Mollier diagram) obtained by subtracting the specific enthalpy of the refrigerant discharged from the high-stage compression element 2d from the specific enthalpy of the refrigerant in the outlet of the heat source-side heat exchanger 4. Thus, the control unit 99 performs a control so that the ratio of the quantity of water flowing through the heat source water tubes 902, 903 and the quantity of water flowing through the intermediate water tubes 904, 905 is equal to the ratio of the heat source specific enthalpy and the intermediate specific enthalpy. When the value of the heat source specific enthalpy and/or the intermediate specific enthalpy changes during adjustment of the flow rate ratio by control, the control unit 99 may perform feedback control in accordance with predetermined time intervals (or a predetermined degree of ratio deviation) so as to adapt to the ratio between the heat source specific enthalpy and the intermediate specific enthalpy at the point in time of the change.

Instead of merely performing control using the values of the heat source specific enthalpy and/or the intermediate specific enthalpy in this manner, the control unit 99 may control the ratio between the quantity of water flowing through the heat source water tubes 902, 903 and the quantity of water flowing through the intermediate water tubes 904, 905 so that the outlet temperature of the heat source-side heat exchanger 4 in the heat source water tube 903 and the outlet temperature of the intercooler 7 in the intermediate water tube 905 are substantially equal, for example. The control unit 99 may cause the outlet temperatures to coincide through a predetermined feedback control in this case as well.

In cases in which the intention is to increase only the quantity of water in the heat source water tubes 902, 903, for example, it is possible for the control unit 99 to also make adjustments for increasing the quantity of water flowing through the heat source water tubes 902, 903 while maintaining a constant quantity of water flowing through the intermediate water tubes 904, 905, by increasing the rotational speed of the motor of the pump 921 to increase the flow rate and by narrowing the opening degree of the flow rate ratio adjustment mechanism 911.

The control unit 99 can thereby perform control for bringing the coefficient of performance of the refrigeration cycle to a satisfactory value in an operation for achieving not only the user's desired output water temperature but the user's desired output water quantity as well.

### <1-6> Modification 4

Another possibility, for example, is to use a refrigerant circuit 10C which is provided with a heat source refrigerant temperature sensor 4T for detecting the temperature of the refrigerant passing through the heat source-side heat exchanger 4, a heat source refrigerant pressure sensor 4P for detecting the pressure of the refrigerant passing through the heat source-side heat exchanger 4, an intermediate refrigerant temperature sensor 22T for detecting the temperature of the refrigerant passing through the intermediate refrigerant tube 22, an intermediate refrigerant pressure sensor 22P for detecting the pressure of the refrigerant passing through the intermediate refrigerant tube 22, and the flow rate ratio adjustment mechanism 911 shown in Modification 3.

The radiated heat quantity that can be supplied to the water from the refrigerant in the heat source-side heat exchanger 4 can be perceived according to the values sensed by the heat source refrigerant temperature sensor 4T for detecting the temperature of the refrigerant passing through the heat source-side heat exchanger 4 and the heat source refrigerant pressure sensor 4P for detecting the pressure of the refrigerant passing through the heat source-side heat exchanger 4, and the heat radiation quantity that can be supplied to the water from the refrigerant in the intercooler 7 can be perceived according to the values sensed by intermediate refrigerant temperature sensor 22T for detecting the temperature of the refrigerant passing through the intermediate refrigerant tube 22 and the intermediate refrigerant pressure sensor 22P for detecting the pressure of the refrigerant passing through the intermediate refrigerant tube 22. Therefore, the control unit 99 can adjust the opening degree of the flow rate ratio adjustment mechanism 911 so as to adapt to the radiated heat quantity that can be supplied to the water from the refrigerant in the heat source-side heat exchanger 4 and the heat radiation quantity that can be supplied to the water from the refrigerant in the intercooler 7, and the control unit 99 can perform control so as to achieve an efficient flow rate ratio for obtaining the required output water temperature.

### <1-7> Modification 5

In Modification 4 described above, a water circuit 910 provided with a flow rate ratio adjustment mechanism 911 was described as an example.

However, the present invention is not limited to this example, and a water circuit may be used in which an on/off valve is provided to the heat source water tubes 902, 903 and an on/off valve is also provided to the intermediate water tubes 904, 905, instead of the flow rate ratio adjustment mechanism 911, for example.

### <1-8> Modification 6

In the embodiment described above, an example of a refrigerant circuit was described in which only one two-stage compression mechanism was provided, wherein compression took place in two stages in the low-stage compression element 2c and the high-stage compression element 2d.

However, the present invention is not limited to this example; another possibility is to use a refrigerant circuit wherein the aforementioned two-stage compression mechanisms which perform compression in two stages are provided in parallel to each other, for example.

In the refrigerant circuit, a plurality of usage-side heat exchangers 6 may be disposed in parallel to each other. In this case, a refrigerant circuit may be used in which expansion mechanisms are disposed immediately ahead of the respective usage-side heat exchangers so that the quantity of refrigerant supplied to the usage-side heat exchangers 6 can be controlled, and the expansion mechanisms are also disposed in parallel to each other.

### <1-9> Modification 7

In the embodiment described above, an example was described in which the low-stage compression element 2c and the high-stage compression element 2d were provided with separate drive shafts 21c, 21f and compressor drive motors 21b, 21e.

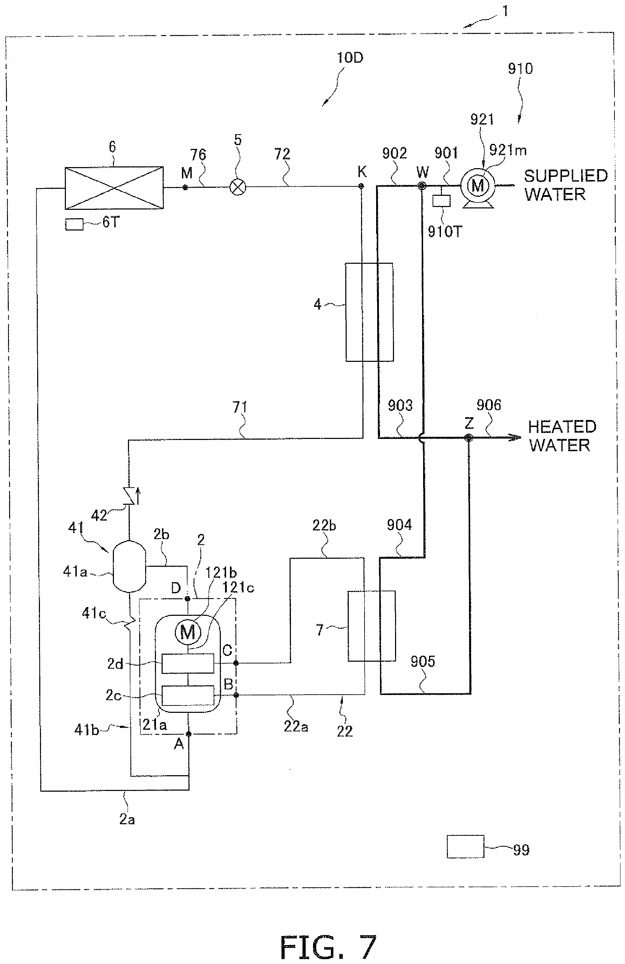

However, the present invention is not limited to this example; another possibility is a refrigerant circuit 10D which uses a compression mechanism 2 having a shared drive shaft 121c which is a drive shaft shared by the low-stage compression element 2c and the high-stage compression element 2d, wherein one shared compressor drive motor 121b is used to transmit drive force to the shared drive shaft 121c, as shown in FIG. 7, for example.

This compression mechanism 2 has a hermetically sealed structure in which the compressor drive motor 121b, the shared drive shaft 121c, and the compression elements 2c, 2d are housed within a casing 21a. The shared compressor drive motor 121b is linked to the shared drive shaft 121c. This shared drive shaft 121c is linked to the two compression elements 2c, 2d. That is, the compression mechanism has a so-called single-shaft two-stage compression structure in which the two compression elements 2c, 2d are linked to a single shared drive shaft 121c, and the two compression elements 2c, 2d are both rotatably driven by the shared compressor drive motor 121b. The compression elements 2c, 2d are rotary-type, scroll-type, or another type of positive displacement compression elements. The low-stage compression element 2c draws refrigerant in from an intake tube 2a, compresses the drawn-in refrigerant, and discharges the refrigerant toward the intermediate refrigerant tube 22. The intermediate refrigerant tube 22 connects the discharge side of the low-stage compression element 2c and the intake side of the high-stage compression element 2d via the intercooler 7. The high-stage compression element 2d further compresses the refrigerant drawn in via the intermediate refrigerant tube 22 and then discharges the refrigerant to the discharge tube 2b. In FIG. 7, the discharge tube 2b is a refrigerant tube for feeding the refrigerant discharged from the compression mechanism 2 to the heat source-side heat exchanger 4, and the discharge tube 2b is provided with an oil separation mechanism 41 and a non-return mechanism 42. The oil separation mechanism 41 is a mechanism for separating the refrigerant from refrigeration oil which accompanies the refrigerant discharged from the compression mechanism 2 and returning the refrigeration oil to the intake side of the compression mechanism 2, and the oil separation mechanism 41 has primarily an oil separator 41a for separating the refrigerant from the refrigeration oil accompanying the refrigerant discharged from the compression mechanism 2, and an oil return tube 41b which is connected to the oil separator 41a and which returns the refrigeration oil separated from the refrigerant to the intake tube 2a of the compression mechanism 2. The oil return tube 41b is provided with a depressurization mechanism 41c for depressurizing the refrigeration oil flowing through the oil return tube 41b. A capillary tube is used as the depressurization mechanism 41c. The non-return mechanism 42 is a mechanism for allowing the flow of refrigerant from the discharge side of the compression mechanism 2 to the heat source-side heat exchanger 4 and blocking the flow of refrigerant from the heat source-side heat exchanger 4 to the discharge side of the compression mechanism 2, and a non-return valve is used.

Thus, the compression mechanism 2 has two compression elements 2c, 2d, and the compression mechanism 2 is configured so that refrigerant discharged from the first-stage compression element of these compression elements 2c, 2d is sequentially compressed by the second-stage compression element.

Since a single-shaft two-stage compression mechanism is used herein, the control unit 99 drives the low-stage compression element 2c and the high-stage compression element 2d while causing their centrifugal forces to cancel each other out to suppress vibrations and/or fluctuations in torque load, and the control unit 99 can perform control so that the operating capacity of the low-stage compression element 2c and the operating capacity of the high-stage compression element 2d are balanced, and the compression ratios are equal in the low-stage and high-stage elements.

### <2> Second Embodiment

### <2-1> Configuration of Air-Conditioning Apparatus

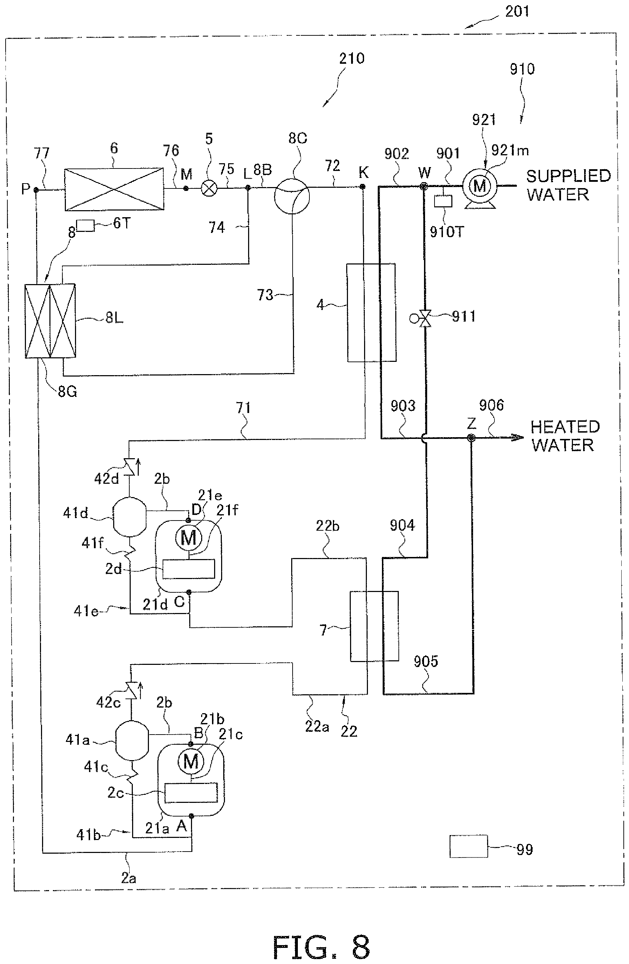

FIG. 8 is a schematic structural diagram of a water heater 201 as a refrigeration apparatus according to the second embodiment of the present invention.

Components in the second embodiment having the same specifics as those of the first embodiment are not described hereinbelow.

### (Water Circuit)

The water circuit 910 is the water circuit of the embodiment described above, but further having the flow rate ratio adjustment mechanism 911 disposed at an intermediate point in the intermediate water tubes 904, 905. The opening degree of this flow rate ratio adjustment mechanism 911 is controlled by the control unit 99, and the ratio between the quantity of water flowing through the heat source water tubes 902, 903 and the quantity of water flowing through the intermediate water tubes 904, 905 can be adjusted.

### (Refrigerant Circuit)

The refrigerant circuit 210 is the refrigerant circuit of the embodiment described above, but further having a liquid-gas heat exchanger 8, a liquid-gas three-way valve 8C, a liquid-gas bypass tube 8B, and connecting tubes 71, 72, 73, 74, 75, 76, 77, and the like connecting these components together.

The liquid-gas heat exchanger 8 has a liquid-side liquid-gas heat exchanger 8L through which passes the refrigerant flowing from the connecting tube 73 to the connecting tube 74, and a gas-side liquid-gas heat exchanger 8G through which passes the refrigerant flowing from the connecting tube 77 to the intake tube 2a. The liquid-gas heat exchanger 8 performs heat exchange between the refrigerant flowing through the liquid-side liquid-gas heat exchanger 8L and the refrigerant flowing through the gas-side liquid-gas heat exchanger 8G. Although the description uses wording such as "liquid"-side "liquid"-gas heat exchanger 8, the refrigerant passing through the liquid-side liquid-gas heat exchanger 8L is not limited to a liquid state, and may be refrigerant in a supercritical state, for example. Nor is the refrigerant flowing through the gas-side liquid-gas heat exchanger 8G limited to refrigerant in a gas state, and refrigerant as moisture may flow through, for example.

The liquid-gas bypass tube 8B connects one switching port of the liquid-gas three-way valve 8C connected to the connecting tube 73, which is on the upstream side of the liquid-side liquid-gas heat exchanger 8L, and an end of the connecting tube 74 extending downstream of the liquid-side liquid-gas heat exchanger 8L.

The liquid-gas three-way valve 8C can switch between a liquid-gas usage connection state in which the connection tube 72 extending from the heat source-side heat exchanger 4 is connected to the connecting tube 73 extending from the liquid-side liquid-gas heat exchanger 8L, and a liquid-gas non-usage connection state in which the connection tube 72 extending from the heat source-side heat exchanger 4 is not connected to the connecting tube 73 extending from the liquid-side liquid-gas heat exchanger 8L but is connected to the liquid-gas bypass tube 8B.

### <2-2> Action of Air-Conditioning Apparatus

Next, the action of the water heater 201 of the second embodiment is described using FIGS. 8, 9, and 10.

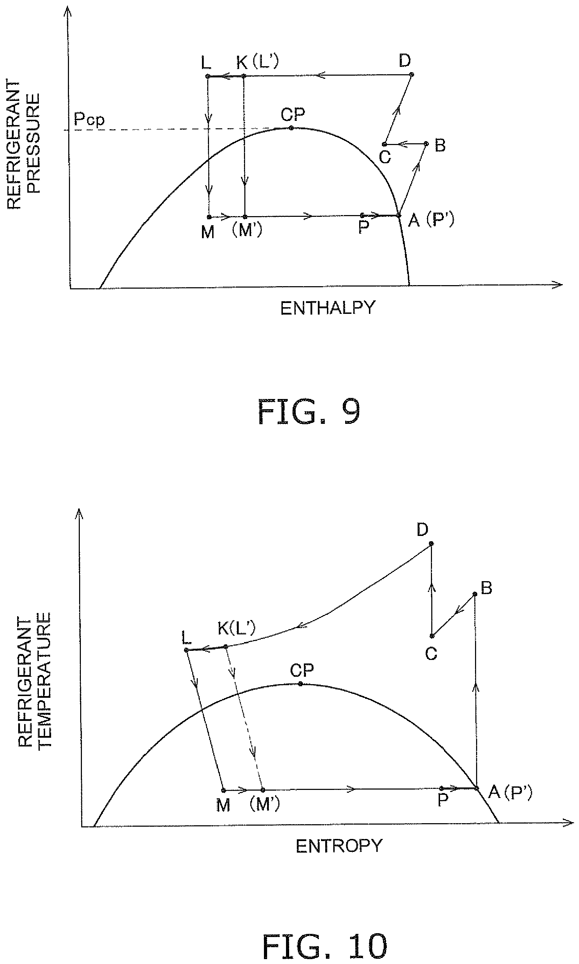

FIG. 9 is a pressure-enthalpy graph representing the refrigeration cycle, and FIG. 10 is a temperature-entropy graph representing the refrigeration cycle.

### (Liquid-gas Usage Connection State)

In the liquid-gas usage connection state, the connection state of the liquid-gas three-way valve 8C is switchably controlled by the control unit 99 so that heat exchange is performed in the liquid-gas heat exchanger 8 between the refrigerant passing through the liquid-side liquid-gas heat exchanger 8L and the refrigerant passing through the gas-side liquid-gas heat exchanger 8G.

Herein, the refrigerant drawn in from the intake tube 2a of the low-stage compression element 2c (refer to point A in FIGS. 9 and 10) is compressed by the low-stage compression element 2c (refer to point B in FIGS. 9 and 10), and the refrigerant flowing through the intermediate refrigerant tube 22 is cooled in the intercooler 7 by the water flowing through the intermediate water tubes 904, 905 (refer to point C in FIGS. 9 and 10).

Having been compressed to a pressure exceeding the critical pressure by the high-stage compression element 2d (refer to point D in FIGS. 9 and 10), the refrigerant is fed to the heat source-side heat exchanger 4. In the heat source-side heat exchanger 4, the water flowing through the heat source water tubes 902, 903 is then heated, whereby the heat within the refrigerant itself is radiated. Since carbon dioxide is used here as the active refrigerant and the refrigerant flows into the heat source-side heat exchanger 4 in a supercritical state, heat is radiated to the exterior by the change in sensible heat while the refrigerant pressure remains constant in the heat radiation step, and the temperature of the refrigerant itself continuously decreases (refer to point K in FIGS. 9 and 10). Having exited the heat source-side heat exchanger 4, the refrigerant flows into the liquid-side liquid-gas heat exchanger 8L, where heat is further radiated due to heat exchange with the low-temperature, low-pressure gas refrigerant flowing through the gas-side liquid-gas heat exchanger 8G, and the temperature of the refrigerant itself continuously decreases further (refer to point L in FIGS. 9 and 10). Having exited the liquid-side liquid-gas heat exchanger 8L, the refrigerant is depressurized by the expansion mechanism 5 (refer to point M in FIGS. 9 and 10), and the refrigerant flows into the usage-side heat exchanger 6. In the usage-side heat exchanger 6, due to heat exchange with external air and/or water while the pressure remains constant, the refrigerant evaporates while the heat taken from the exterior is consumed in a change of latent heat, whereby the dryness of the refrigerant increases (refer to point P in FIGS. 9 and 10). Having exited the usage-side heat exchanger 6, the refrigerant evaporates further while undergoing a change in latent heat in the gas-side liquid-gas heat exchanger 8G due this time to the heat taken by heat exchange with the high-temperature, high-pressure refrigerant passing through the liquid-side liquid-gas heat exchanger 8L while the pressure remains constant, and the refrigerant reaches a superheated state above the dry saturated vapor curve at this pressure. This refrigerant in a superheated state is then drawn into the low-stage compression element 2c through the intake tube 2a (point A in FIGS. 9 and 10). This refrigerant circulation is repeated in the liquid-gas usage connection state.

### (Liquid-gas Non-Usage Connection State)

In the liquid-gas non-usage connection state, the control unit 99 controls the connection state of the liquid-gas three-way valve 8C and creates a state in which the connection tube 72 and the liquid-gas bypass tube 8B are connected, so that heat exchange is not performed in the liquid-gas heat exchanger 8.

The points A, B, C, D, and K of FIGS. 9 and 10 in the liquid-gas non-usage connection state are the same as in the liquid-gas usage connection state and are therefore not described.

The refrigerant that has exited the heat source-side heat exchanger 4 herein flows through the liquid-gas bypass tube 8B to be depressurized in the expansion mechanism 5 without flowing into the liquid-side liquid-gas heat exchanger 8L (refer to point L' in FIGS. 9 and 10). The refrigerant is then depressurized in the expansion mechanism 5, and the refrigerant flows into the usage-side heat exchanger 6 (refer to point M' in FIGS. 9 and 10). In the usage-side heat exchanger 6, through heat exchange with external air and/or water while the pressure remains constant, the refrigerant evaporates while the heat taken from the exterior is consumed in a latent heat change, whereby the refrigerant reaches a superheated state above the dry saturated vapor curve at this pressure. This refrigerant in a superheated state is then drawn into the low-stage compression element 2c through the intake tube 2a (refer to point P' in FIGS. 9 and 10). This refrigerant circulation is repeated in the liquid-gas non-usage connection state.

### (Liquid-gas Heat Exchanger Switching Control)

The control unit 99 performs the same control as the target capacity output control described in Embodiment 1 above, and also performs liquid-gas heat exchanger switching control for switching between the above-described liquid-gas usage connection state and liquid-gas non-usage connection state.

In this liquid-gas heat exchanger switching control, the control unit 99 switches the connection state of the liquid-gas three-way valve 8C in accordance with the temperature sensed by the usage-side temperature sensor 6T.

In the target capacity output control described above, the target evaporation temperature is established based on the temperature sensed by the usage-side temperature sensor 6T, but when the temperature sensed by the usage-side temperature sensor 6T decreases and the target evaporation temperature is set to be even lower, the discharged refrigerant temperature increases under the control condition that the target discharge pressure of the high-stage compression element 2d does not change (under the condition that the required radiated heat quantity must be guaranteed in the heat source-side heat exchanger 4). The reliability of the high-stage compression element 2d is compromised when the discharged refrigerant temperature increases too much in this manner. Therefore, the control unit 99 herein performs a control for bringing the connection state of the liquid-gas three-way valve 8C to the liquid-gas non-usage connection state. Thereby, even if the temperature sensed by the usage-side temperature sensor 6T decreases and the target evaporation temperature is set to be even lower, the extent of the increase in the degree of superheating of the refrigerant drawn in by the high-stage compression element 2d can be minimized to minimize the increase in the discharged refrigerant temperature, and the required heat radiation quantity can be maintained.

On the other hand, in the target capacity output control described above, the target evaporation temperature is established based on the temperature sensed by the usage-side temperature sensor 6T, but when the temperature sensed by the usage-side temperature sensor 6T increases and the target evaporation temperature is set to be even higher, the discharged refrigerant temperature decreases under the control condition that the target discharge pressure of the high-stage compression element 2d does not change (under the condition that the required radiated heat quantity must be guaranteed in the heat source-side heat exchanger 4). In this case, it will sometimes not be possible to supply the heat source-side heat exchanger 4 with refrigerant having the required heat radiation quantity. In such cases, the control unit 99 is capable of switching the connection state of the liquid-gas three-way valve 8C to the liquid-gas usage connection state, raising the degree of superheating of the refrigerant drawn into the high-stage compression element 2d, and guaranteeing the heat radiation quantity required in the heat source-side heat exchanger 4. There are also cases in which it is possible to improve the coefficient of performance even when the required heat radiation quantity can be supplied in this manner. In such cases, the control unit 99 is capable of guaranteeing the required heat radiation quantity and improving the coefficient of performance by switching the connection state of the liquid-gas three-way valve 8C to the liquid-gas usage connection state, lowering the specific enthalpy of the refrigerant drawn into the expansion mechanism 5, and improving the refrigerating capacity of the refrigeration cycle. Since the refrigerant drawn into the low-stage compression element 2c can be guaranteed to have the appropriate degree of superheating, it is possible to prevent the risk of liquid compression occurring in the low-stage compression element 2c.

### <2-3> Modification 1

In the embodiment described above, an example was described in which the control unit 99 switches the connection state of the liquid-gas three-way valve 8C on the basis of the temperature sensed by the usage-side temperature sensor 6T (on the basis of the established target evaporation temperature).

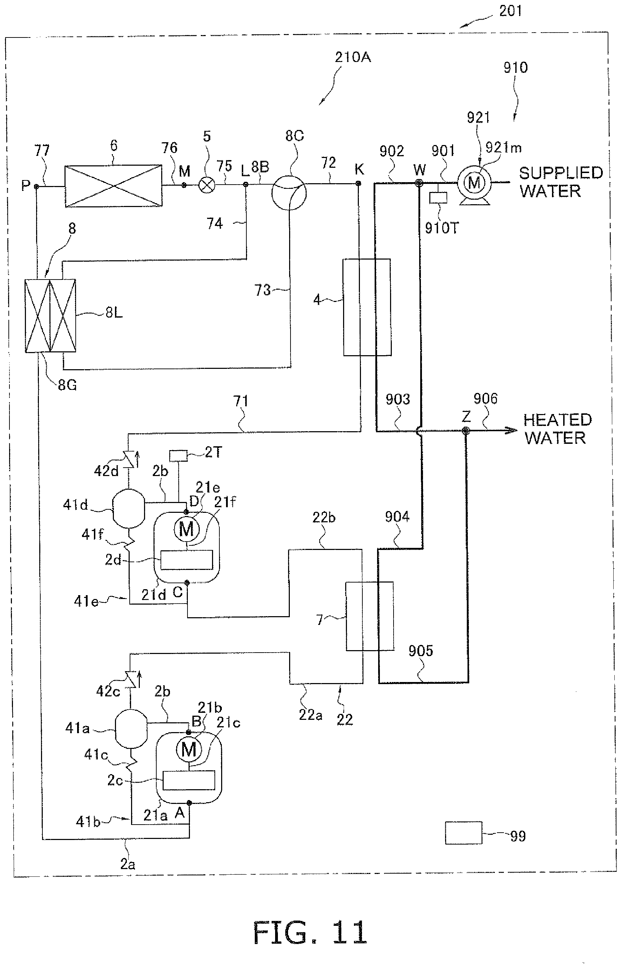

However, the present invention is not limited to this example; another possibility is to use a refrigerant circuit 210A having a discharged refrigerant temperature sensor 2T for sensing the temperature of the refrigerant discharged from the high-stage compression element 2d, instead of the usage-side temperature sensor 6T, as shown in FIG. 11, for example.

With this discharged refrigerant temperature sensor 2T, an increase in the temperature sensed by the usage-side temperature sensor 6T described above corresponds to a decrease in the temperature sensed by the discharged refrigerant temperature sensor 2T, and a decrease in the temperature sensed by the usage-side temperature sensor 6T described above corresponds to an increase in the temperature sensed by the discharged refrigerant temperature sensor 2T. That is, if the temperature sensed by the discharged refrigerant temperature sensor 2T is too high, it will not be possible to maintain the reliability of the high-stage compression element 2d, and the control unit 99 will therefore bring the connection state of the liquid-gas three-way valve 8C to the liquid-gas non-usage connection state, preventing the degree of superheating of the refrigerant drawn into the low-stage compression element 2c from increasing. If the temperature sensed by the discharged refrigerant temperature sensor 2T decreases, it will not be possible to supply the heat radiation quantity required in the heat source-side heat exchanger 4, and the control unit 99 therefore will bring the connection state of the liquid-gas three-way valve 8C to the liquid-gas usage connection state and increase the degree of superheating of the refrigerant drawn into the low-stage compression element 2c, guaranteeing a capacity. In conditions in which the refrigerant drawn into the low-stage compression element 2c has a low temperature and the temperature of the refrigerant discharged by the high-stage compression element 2d does not increase excessively even if the degree of superheating has been raised, the control unit 99 brings the connection state of the liquid-gas three-way valve 8C to the liquid-gas usage connection state and lowers the specific enthalpy of the refrigerant fed to the expansion mechanism 5 to improve the refrigerating capacity of the refrigeration cycle, thereby raising the coefficient of performance.

### <2-4> Modification 2

In the embodiment described above, an example was described in which the connection state of the liquid-gas three-way valve 8C is switched to switch between the liquid-gas usage connection state and the liquid-gas non-usage connection state.

However, the present invention is not limited to this example; another possibility is to cause refrigerant to flow to both the liquid-gas bypass tube 8B and the liquid-gas heat exchanger 8L and control the refrigerant flow rate ratio of both refrigerant passages by adjusting the switched state of the liquid-gas three-way valve 8C, for example.

### <2-5> Modification 3

In the embodiment described above, an example was described of a refrigerant circuit provided with the liquid-gas three-way valve 8C.

However, the present invention is not limited to this example; another possibility is to use a refrigerant circuit which has an on/off valve provided to the connecting tube 73 and an on/off valve also provided to the liquid-gas bypass tube 8B, instead of the liquid-gas three-way valve 8C, for example.

### <2-6> Modification 4

In the embodiment described above, an example was described of a refrigerant circuit provided with only one two-stage compression mechanism, wherein refrigerant is compressed in two stages in the low-stage compression element 2c and the high-stage compression element 2d.

However, the present invention is not limited to this example; another possibility is to use a refrigerant circuit wherein the aforementioned two-stage compression mechanisms which perform compression in two stages are provided in parallel to each other, for example.

In the refrigerant circuit, a plurality of usage-side heat exchangers 6 may be disposed in parallel to each other. In this case, a refrigerant circuit may be used in which expansion mechanisms are disposed immediately ahead of the respective usage-side heat exchangers and the expansion mechanisms are also disposed in parallel to each other so that the quantity of refrigerant supplied to the usage-side heat exchangers 6 can be controlled.

### <2-7> Modification 5

In the embodiment described above, an example was described in which the low-stage compression element 2c and the high-stage compression element 2d were provided with separate drive shafts 21c, 21f and compressor drive motors 21 b, 21e.

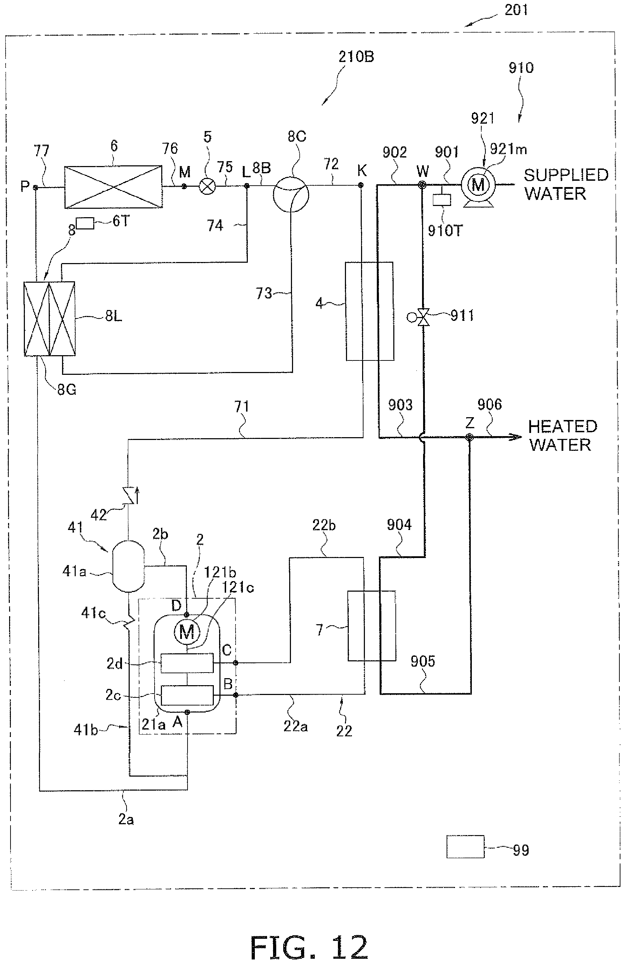

However, the present invention is not limited to this example; another possibility is a refrigerant circuit 210B which uses a compression mechanism 2 having a shared drive shaft 121c which is a drive shaft shared by the low-stage compression element 2c and the high-stage compression element 2d, wherein one shared compressor drive motor 121b is used to transmit drive force to the shared drive shaft 121c, as shown in FIG. 12, for example.

This compression mechanism 2 has a hermetically sealed structure in which the compressor drive motor 121b, the shared drive shaft 121c, and the compression elements 2c, 2d are housed within a casing 21a. The shared compressor drive motor 121b is linked to the shared drive shaft 121c. This shared drive shaft 121c is linked to the two compression elements 2c, 2d. That is, the compression mechanism has a so-called single-shaft two-stage compression structure in which the two compression elements 2c, 2d are linked to a single shared drive shaft 121c, and the two compression elements 2c, 2d are both rotatably driven by the shared compressor drive motor 121b. The compression elements 2c, 2d are rotary-type, scroll-type, or another type of positive displacement compression elements. The low-stage compression element 2c draws refrigerant in from an intake tube 2a, compresses the drawn-in refrigerant, and discharges the refrigerant toward the intermediate refrigerant tube 22. The intermediate refrigerant tube 22 connects the discharge side of the low-stage compression element 2c and the intake side of the high-stage compression element 2d via the intercooler 7. The high-stage compression element 2d further compresses the refrigerant drawn in via the intermediate refrigerant tube 22 and then discharges the refrigerant to the discharge tube 2b. In FIG. 12, the discharge tube 2b is a refrigerant tube for feeding the refrigerant discharged from the compression mechanism 2 to the heat source-side heat exchanger 4, and the discharge tube 2b is provided with an oil separation mechanism 41 and a non-return mechanism 42. The oil separation mechanism 41 is a mechanism for separating the refrigerant from refrigeration oil which accompanies the refrigerant discharged from the compression mechanism 2 and returning the refrigeration oil to the intake side of the compression mechanism 2, and the oil separation mechanism 41 has primarily an oil separator 41a for separating the refrigerant from the refrigeration oil accompanying the refrigerant discharged from the compression mechanism 2, and an oil return tube 41b which is connected to the oil separator 41a and which returns the refrigeration oil separated from the refrigerant to the intake tube 2a of the compression mechanism 2. The oil return tube 41 b is provided with a depressurization mechanism 41c for depressurizing the refrigeration oil flowing through the oil return tube 41b. A capillary tube is used as the depressurization mechanism 41c. The non-return mechanism 42 is a mechanism for allowing the flow of refrigerant from the discharge side of the compression mechanism 2 to the heat source-side heat exchanger 4 and blocking the flow of refrigerant from the heat source-side heat exchanger 4 to the discharge side of the compression mechanism 2, and a non-return valve is used.

Thus, the compression mechanism 2 has two compression elements 2c, 2d, and the compression mechanism 2 is configured so that refrigerant discharged from the first-stage compression element of these compression elements 2c, 2d is sequentially compressed by the second-stage compression element.

Since a single-shaft two-stage compression mechanism is used herein, the control unit 99 drives the low-stage compression element 2c and the high-stage compression element 2d while causing their centrifugal forces to cancel each other out to suppress vibrations and/or fluctuations in torque load, and the control unit 99 can perform control so that the operating capacity of the low-stage compression element 2c and the operating capacity of the high-stage compression element 2d are balanced, and the compression ratios are equal in the low-stage and high-stage elements.

### <3> Third Embodiment

### <3-1> Configuration of Air-Conditioning Apparatus

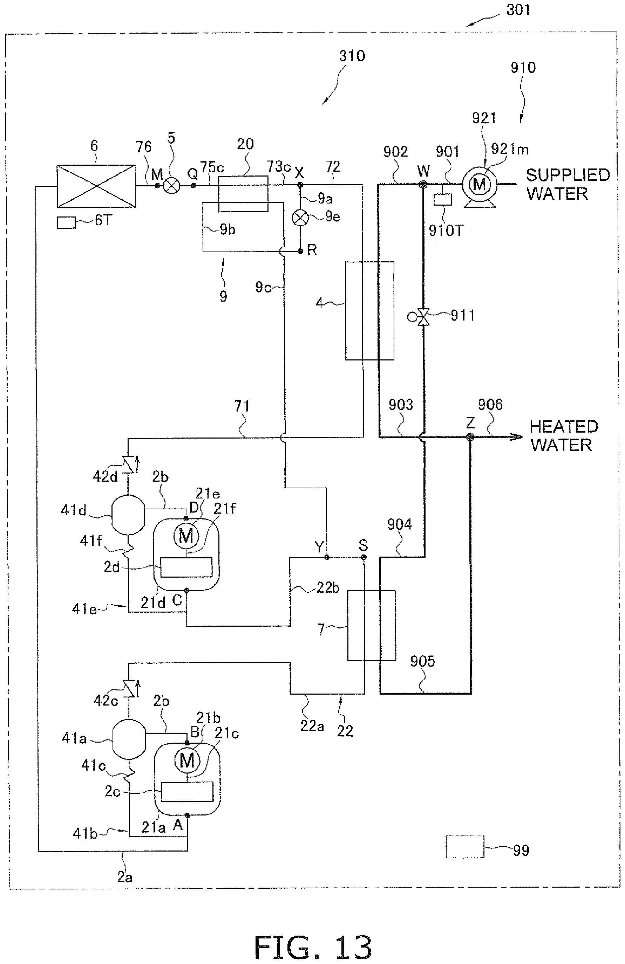

FIG. 13 is a schematic structural diagram of a water heater 301, which is a refrigeration apparatus according to the third embodiment of the present invention.

Components in the third embodiment that have the same specifications as those of the first embodiment are not described hereinbelow.

### (Water Circuit)

The water circuit 910 is the water circuit of the embodiment described above, but further having the flow rate ratio adjustment mechanism 911 disposed at an intermediate point in the intermediate water tubes 904, 905. The opening degree of this flow rate ratio adjustment mechanism 911 is controlled by the control unit 99, and the ratio between the quantity of water flowing through the heat source water tubes 902, 903 and the quantity of water flowing through the intermediate water tubes 904, 905 can be adjusted.

### (Refrigerant Circuit)

The refrigerant circuit 310 is the refrigerant circuit of the embodiment described above, but further having an economizer circuit 9, and connecting tubes 73c, 74c, etc, connecting the other components.

The economizer circuit 9 has a branching upstream tube 9a branching off from a branching point X between the connection tube 72 and the connecting tube 73c, an economizer expansion mechanism 9e for depressurizing refrigerant, a branching midstream tube 9b for leading the refrigerant depressurized in the economizer expansion mechanism 9e to the economizer heat exchanger 20, and a branching downstream tube 9c for leading the refrigerant that has flowed out of the economizer heat exchanger 20 to a convergent point Y in the intermediate refrigerant tube 22.

The connecting tube 73c leads refrigerant through the economizer heat exchanger 20 to a connecting tube 75c. This connecting tube 75c is connected to the expansion mechanism 5.

The configuration is otherwise the same as that of the water heater 1 of the first embodiment described above.

### <3-2> Action of Air-Conditioning Apparatus

Next, the action of the water heater 301 of the third embodiment will be described using FIGS. 13, 14, and 15.

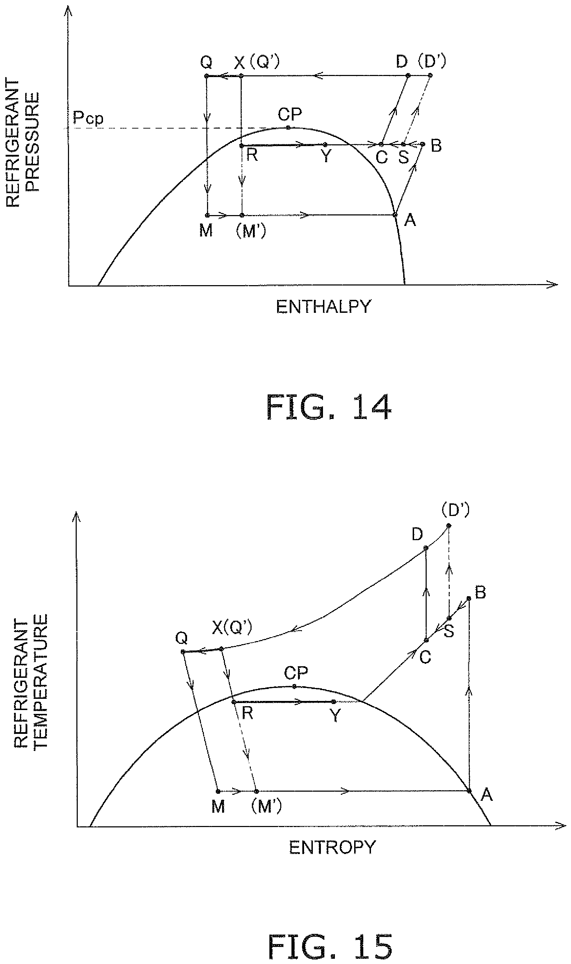

FIG. 14 is a pressure-enthalpy graph representing the refrigeration cycle, and FIG. 15 is a temperature-entropy graph representing the refrigeration cycle.

### (Economizer Usage State)

In an economizer usage state, refrigerant is caused to flow to the economizer circuit 9 by adjusting the opening degree of the economizer expansion mechanism 9e.

In the economizer circuit 9, refrigerant that has branched off from the branching point X and flowed into the branching upstream tube 9a is depressurized in the economizer expansion mechanism 9e (refer to point R in FIGS. 13, 14, and 15), and the refrigerant flows into the economizer heat exchanger 20 via the branching midstream tube 9b.

In the economizer heat exchanger 20, heat exchange takes place between the refrigerant flowing through the connecting tube 73c and the connecting tube 75c (refer to point X → point Q in FIGS. 13, 14, and 15), and the refrigerant flowing into the economizer heat exchanger 20 via the branching midstream tube 9b (refer to point R → point Y in FIGS. 13, 14, and 15).

At this time, the refrigerant flowing through the connecting tube 73c and the connecting tube 75c is cooled by the refrigerant flowing through the branching midstream tube 9b, which is being depressurized and reduced in temperature in the economizer heat exchanger 20, and the specific enthalpy decreases (refer to point X → point Q in FIGS. 13, 14, and 15). Thus, the degree of supercooling of the refrigerant fed to the expansion mechanism 5 increases, whereby the refrigeration capacity of the refrigeration cycle increases and the coefficient of performance improves. The refrigerant whose specific enthalpy has decreased is depressurized by passing through the expansion mechanism 5, and the refrigerant flows into the usage-side heat exchanger 6 (refer to point Q → point M in FIGS. 13, 14, and 15). The refrigerant evaporates in the usage-side heat exchanger 6, and the refrigerant is drawn into the low-stage compression element 2c (refer to point M → point A in FIGS. 13, 14, and 15). The refrigerant drawn into the low-stage compression element 2c is compressed and increased in temperature, creating a state in which refrigerant increased in pressure to an intermediate pressure flows through the intermediate refrigerant tube 22.

When the refrigerant flowing through the intermediate refrigerant tube 22 passes through the intercooler 7, the refrigerant radiates heat upon heating the water flowing through the intermediate water tubes 904, 905, and the refrigerant temperature decreases (refer to point B → point S in FIGS. 13, 14, and 15).

The refrigerant flowing into the economizer heat exchanger 20 via the branching midstream tube 9b is heated by the refrigerant flowing through the connecting tube 73c and the connecting tube 75c, whereby the dryness of the refrigerant improves (refer to point R → point Y in FIGS. 13, 14, and 15).

Thus, refrigerant that has passed through the economizer circuit 9 (refer to point Y in FIGS. 13, 14, an 15) mixes with refrigerant that has been cooled in the intercooler 7 while flowing through the intermediate refrigerant tube 22 (refer to point S in FIGS. 13, 14, and 15) at the convergent point Y in the intermediate refrigerant tube 22 described above, the refrigerant temperature decreases while the intermediate pressure is maintained, the degree of superheating of the refrigerant discharged from the low-stage compression element 2c is reduced, and the refrigerant is drawn into the high-stage compression element 2d (refer to points Y, S, and C in FIGS. 13, 14, and 15). The temperature of the refrigerant drawn into the high-stage compression element 2d thereby decreases, and it is therefore possible to prevent the temperature of the refrigerant discharged from the high-stage compression element 2d from increasing excessively. The refrigerant density also increases due to the temperature of the refrigerant drawn into the high-stage compression element 2d decreasing, and the quantity of refrigerant circulating through the heat source-side heat exchanger 4 is increased by the refrigerant injected via the economizer circuit 9; therefore, the capacity to supply refrigerant to the heat source-side heat exchanger 4 can be greatly improved.

In the economizer usage state, this manner of refrigerant circulation is repeated.

### (Economizer Non-usage State)

In the economizer non-usage state, the economizer expansion mechanism 9e in the economizer circuit 9 is brought to a fully closed state. A state thereby arises in which the flow of refrigerant in the branching midstream tube 9b ceases and the economizer heat exchanger 20 does not function (refer to points Q', M', and D' in FIGS. 13, 14, and 15).

The cooling effects of the refrigerant flowing through the intermediate refrigerant tube 22 thereby ceases, the temperature of the refrigerant discharged from the high-stage compression element 2d therefore increases, and it is possible to comply with a high output water temperature requested by the user.

### (Economizer Switching Control)

The control unit 99 performs the same control as the target capacity output control described in Embodiment 1 described above, and performs economizer switching control for switching between the economizer usage state and the economizer non-usage state described above.

In this economizer switching control, the control unit 99 controls the opening degree of the economizer expansion mechanism 9e in accordance with the temperature sensed by the usage-side temperature sensor 6T.

In the target capacity output control described above, the target evaporation temperature is established based on the temperature sensed by the usage-side temperature sensor 6T, but when the temperature sensed by the usage-side temperature sensor 6T decreases and the target evaporation temperature is set to be even lower, the discharged refrigerant temperature increases under the control condition that the target discharge pressure of the high-stage compression element 2d does not change (under the condition that the required radiated heat quantity must be guaranteed in the heat source-side heat exchanger 4). The reliability of the high-stage compression element 2d is compromised when the discharged refrigerant temperature increases too much in this manner. Therefore, the control unit 99 herein performs a control for creating the economizer usage state, wherein the economizer heat exchanger 20 is made to function by opening the economizer expansion mechanism 9e and causing refrigerant to flow to the economizer circuit 9. Thereby, even if the temperature sensed by the usage-side temperature sensor 6T decreases and the target evaporation temperature is set to be even lower, the extent of the increase in the temperature of the refrigerant drawn in by the high-stage compression element 2d can be minimized to minimize the increase in the discharged refrigerant temperature, and the required heat radiation quantity can be maintained.

On the other hand, in the target capacity output control described above, the target evaporation temperature is established based on the temperature sensed by the usage-side temperature sensor 6T, but when the temperature sensed by the usage-side temperature sensor 6T increases and the target evaporation temperature is set to be even higher, the discharged refrigerant temperature decreases under the control condition that the target discharge pressure of the high-stage compression element 2d does not change (under the condition that the required radiated heat quantity must be guaranteed in the heat source-side heat exchanger 4). In this case, it will sometimes not be possible to supply the heat source-side heat exchanger 4 with refrigerant having the required heat radiation quantity. In such cases, the control unit 99 is capable of creating the economizer non-usage state in which the economizer expansion mechanism 9e is fully closed, ensuring that the degree of superheating of the refrigerant drawn in by the high-stage compression element 2d does not decrease, and guaranteeing the heat radiation quantity required in the heat source-side heat exchanger 4. There are also cases in which it is possible to improve the coefficient of performance even when the required heat radiation quantity can be supplied in this manner. In such cases, the control unit 99 is capable of guaranteeing the required heat radiation quantity and improving the coefficient of performance by opening the economizer expansion mechanism 9e to create the economizer usage state, lowering the specific enthalpy of the refrigerant drawn into the expansion mechanism 5, and improving the refrigerating capacity of the refrigeration cycle.

### <3-3> Modification 1

In the embodiment described above, an example was described in which the control unit 99 switches the opening degree of the economizer expansion mechanism 9e on the basis of the temperature sensed by the usage-side temperature sensor 6T (on the basis of the established target evaporation temperature).

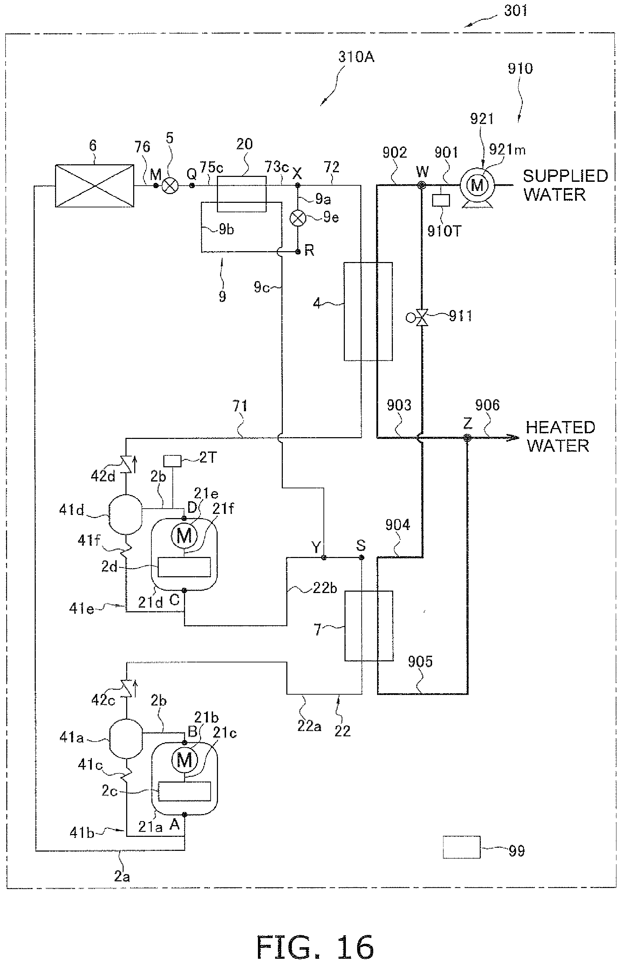

However, the present invention is not limited to this example; another possibility is to use a refrigerant circuit 310A having a discharged refrigerant temperature sensor 2T for sensing the temperature of the refrigerant discharged from the high-stage compression element 2d, instead of the usage-side temperature sensor 6T, as shown in FIG. 16, for example.

With this discharged refrigerant temperature sensor 2T, an increase in the temperature sensed by the usage-side temperature sensor 6T described above corresponds to a decrease in the temperature sensed by the discharged refrigerant temperature sensor 2T, and a decrease in the temperature sensed by the usage-side temperature sensor 6T described above corresponds to an increase in the temperature sensed by the discharged refrigerant temperature sensor 2T. That is, if the temperature sensed by the discharged refrigerant temperature sensor 2T is too high, it will not be possible to maintain the reliability of the high-stage compression element 2d, and the control unit 99 will therefore increase the opening degree of the economizer expansion mechanism 9e to bring about the economizer usage state, preventing the discharged refrigerant temperature of the high-stage compression element 2d from increasing excessively by reducing the degree of superheating of the refrigerant drawn into the low-stage compression element 2c. If the temperature sensed by the discharged refrigerant temperature sensor 2T decreases, it will not be possible to supply the heat radiation quantity required in the heat source-side heat exchanger 4, and the control unit 99 therefore will fully close the economizer expansion mechanism 9e to bring about the economizer non-usage state and guarantee a capacity without reducing the degree of superheating of the refrigerant drawn into the high-stage compression element 2d. In conditions in which the refrigerant drawn into the high-stage compression element 2d has a low temperature and the temperature of the refrigerant discharged by the high-stage compression element 2d does not increase excessively even if the degree of superheating has been raised, the control unit 99 increases the opening degree of the economizer expansion mechanism 9e to bring about the economizer usage state and lowers the specific enthalpy of the refrigerant fed to the expansion mechanism 5 to improve the refrigerating capacity of the refrigeration cycle, thereby raising the coefficient of performance.

### <3-4> Modification 2

In the embodiment described above, an example was described in which the opening degree of the economizer expansion mechanism 9e is adjusted to switch between the economizer usage state and the economizer non-usage state.

However, the present invention is not limited to this example; another possibility is to control the flow rate ratio of the refrigerants flowing to the economizer circuit 9 and the connecting tubes 73c, 75c by adjusting the valve opening degree of the economizer expansion mechanism 9e, for example.

### <3-5> Modification 3

In the embodiment described above, an example was described of a refrigerant circuit provided with only one two-stage compression mechanism, wherein refrigerant is compressed in two stages in the low-stage compression element 2c and the high-stage compression element 2d.

However, the present invention is not limited to this example; another possibility is to use a refrigerant circuit wherein the aforementioned two-stage compression mechanisms which perform compression in two stages are provided in parallel to each other, for example.

In the refrigerant circuit, a plurality of usage-side heat exchangers 6 may be disposed in parallel to each other. In this case, a refrigerant circuit may be used in which expansion mechanisms are disposed immediately ahead of the respective usage-side heat exchangers and the expansion mechanisms are also disposed in parallel to each other so that the quantity of refrigerant supplied to the usage-side heat exchangers 6 can be controlled.

### <3-6> Modification 4

In the embodiment described above, an example was described in which the low-stage compression element 2c and the high-stage compression element 2d were provided with the separate drive shafts 21c, 21f and the compressor drive motors 21b, 21e.

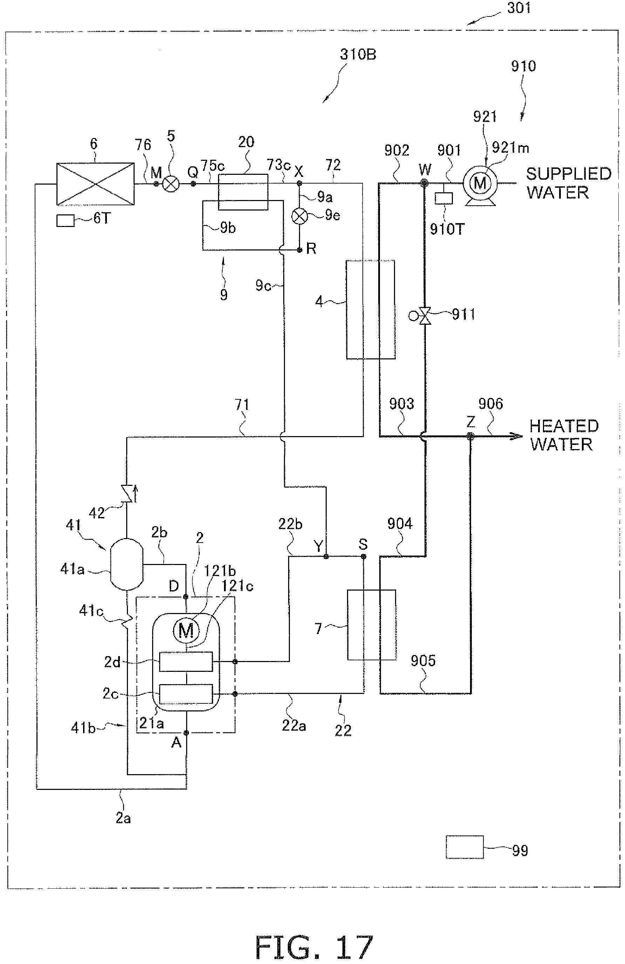

However, the present invention is not limited to this example; another possibility is a refrigerant circuit 310B which uses a compression mechanism 2 having a shared drive shaft 121c which is a drive shaft shared by the low-stage compression element 2c and the high-stage compression element 2d, wherein one shared compressor drive motor 121b is used to transmit drive force to the shared drive shaft 121c, as shown in FIG. 17, for example.

This compression mechanism 2 has a hermetically sealed structure in which the compressor drive motor 121b, the shared drive shaft 121c, and the compression elements 2c, 2d are housed within a casing 21a. The shared compressor drive motor 121b is linked to the shared drive shaft 121c. This shared drive shaft 121c is linked to the two compression elements 2c, 2d. That is, the compression mechanism has a so-called single-shaft two-stage compression structure in which the two compression elements 2c, 2d are linked to a single shared drive shaft 121c, and the two compression elements 2c, 2d are both rotatably driven by the shared compressor drive motor 121b. The compression elements 2c, 2d are rotary-type, scroll-type, or another type of positive displacement compression elements. The low-stage compression element 2c draws refrigerant in from an intake tube 2a, compresses the drawn-in refrigerant, and discharges the refrigerant toward the intermediate refrigerant tube 22. The intermediate refrigerant tube 22 connects the discharge side of the low-stage compression element 2c and the intake side of the high-stage compression element 2d via the intercooler 7. The high-stage compression element 2d further compresses the refrigerant drawn in via the intermediate refrigerant tube 22 and then discharges the refrigerant to the discharge tube 2b. In FIG. 17, the discharge tube 2b is a refrigerant tube for feeding the refrigerant discharged from the compression mechanism 2 to the heat source-side heat exchanger 4, and the discharge tube 2b is provided with an oil separation mechanism 41 and a non-return mechanism 42. The oil separation mechanism 41 is a mechanism for separating the refrigerant from refrigeration oil which accompanies the refrigerant discharged from the compression mechanism 2 and returning the refrigeration oil to the intake side of the compression mechanism 2, and the oil separation mechanism 41 has primarily an oil separator 41a for separating the refrigerant from the refrigeration oil accompanying the refrigerant discharged from the compression mechanism 2, and an oil return tube 41b which is connected to the oil separator 41a and which returns the refrigeration oil separated from the refrigerant to the intake tube 2a of the compression mechanism 2. The oil return tube 41b is provided with a depressurization mechanism 41c for depressurizing the refrigeration oil flowing through the oil return tube 41b. A capillary tube is used as the depressurization mechanism 41c. The non-return mechanism 42 is a mechanism for allowing the flow of refrigerant from the discharge side of the compression mechanism 2 to the heat source-side heat exchanger 4 and blocking the flow of refrigerant from the heat source-side heat exchanger 4 to the discharge side of the compression mechanism 2, and a non-return valve is used.

Thus, the compression mechanism 2 has the two compression elements 2c, 2d, and the compression mechanism 2 is configured so that refrigerant discharged from the first-stage compression element of these compression elements 2c, 2d is sequentially compressed by the second-stage compression element.

Since a single-shaft two-stage compression mechanism is used herein, the control unit 99 drives the low-stage compression element 2c and the high-stage compression element 2d while causing their centrifugal forces to cancel each other out to suppress vibrations and/or fluctuations in torque load, and the control unit 99 can perform control so that the operating capacity of the low-stage compression element 2c and the operating capacity of the high-stage compression element 2d are balanced, and the compression ratios are equal in the low-stage and high-stage elements.

### <4> Fourth Embodiment

### <4-1> Configuration of Air-Conditioning Apparatus

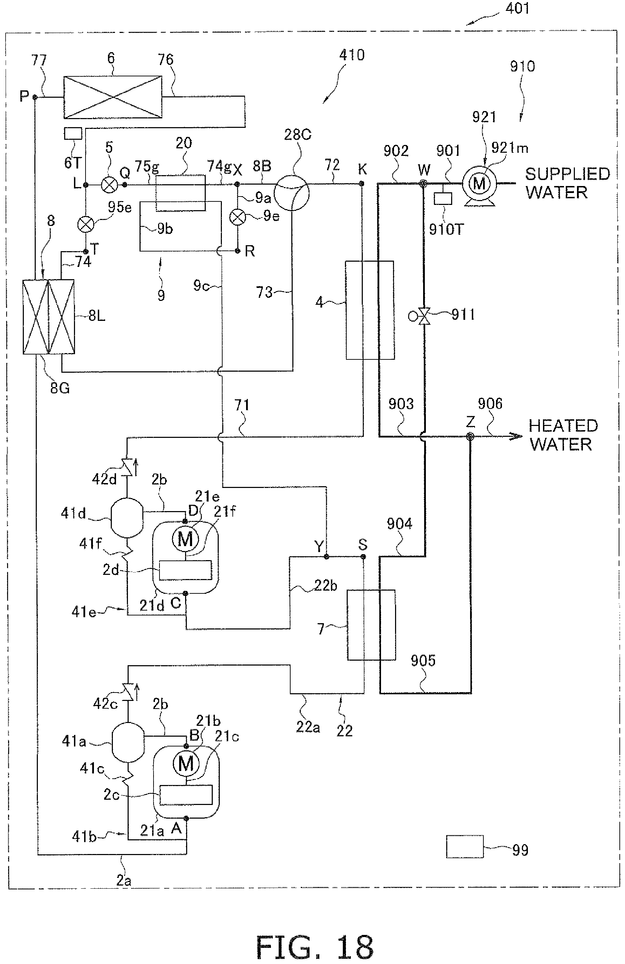

FIG. 18 is a schematic structural diagram of a water heater 401, which is a refrigeration apparatus according to the fourth embodiment of the present invention.

Components in the fourth embodiment that have the same specifics as those of the first embodiment are not described herein.

### (Water Circuit)

The water circuit 910 is the water circuit of the embodiment described above, but further having the flow rate ratio adjustment mechanism 911 disposed at an intermediate point in the intermediate water tubes 904, 905. The opening degree of this flow rate ratio adjustment mechanism 911 is controlled by the control unit 99, and the ratio between the quantity of water flowing through the heat source water tubes 902, 903 and the quantity of water flowing through the intermediate water tubes 904, 905 can be adjusted.

### (Refrigerant Circuit)

The refrigerant circuit 410 is the refrigerant circuit of the embodiment described above, but further having the liquid-gas heat exchanger 8, a switching three-way valve 28C, the liquid-gas bypass tube 8B, the economizer circuit 9, and connecting tubes 74g, 75g, etc. connecting these components.

The liquid-gas heat exchanger 8 has a liquid-side liquid-gas heat exchanger 8L through which passes the refrigerant flowing from the connecting tube 73 to the connecting tube 74, and a gas-side liquid-gas heat exchanger 8G through which passes the refrigerant flowing from the connecting tube 77 to the intake tube 2a. The liquid-gas heat exchanger 8 performs heat exchange between the refrigerant flowing through the liquid-side liquid-gas heat exchanger 8L and the refrigerant flowing through the gas-side liquid-gas heat exchanger 8G. Although the description uses wording such as "liquid"-side "liquid"-gas heat exchanger 8, the refrigerant passing through the liquid-side liquid-gas heat exchanger 8L is not limited to a liquid state, and may be refrigerant in a supercritical state, for example. Nor is the refrigerant flowing through the gas-side liquid-gas heat exchanger 8G limited to refrigerant in a gas state, and refrigerant as moisture may flow through, for example. An expansion mechanism 95e is provided at an intermediate point in the connecting tube 74.

The liquid-gas bypass tube 8B connects one switching port of the switching three-way valve 28C connected to the connecting tube 73, which is on the upstream side of the liquid-side liquid-gas heat exchanger 8L, and an end of the connecting tube 74 extending downstream of the liquid-side liquid-gas heat exchanger 8L.

The switching three-way valve 28C can switch between a liquid-gas state in which the connection tube 72 extending from the heat source-side heat exchanger 4 is connected to the connecting tube 73 extending from the liquid-side liquid-gas heat exchanger 8L, and an economizer state in which the connection tube 72 extending from the heat source-side heat exchanger 4 is not connected to the connecting tube 73 extending from the liquid-side liquid-gas heat exchanger 8L but is connected to the liquid-gas bypass tube 8B. By fully closing the economizer expansion mechanism 9e in the economizer state, a dual-function non-usage state can be brought about in which neither the economizer circuit 9 nor the liquid-gas heat exchanger 8 are used.

The economizer circuit 9 has a branching upstream tube 9a branching off from a branching point X between the liquid-gas bypass tube 8B and the connecting tube 74g, an economizer expansion mechanism 9e for depressurizing refrigerant, a branching midstream tube 9b for leading the refrigerant depressurized in the economizer expansion mechanism 9e to the economizer heat exchanger 20, and a branching downstream tube 9c for leading the refrigerant that has flowed out of the economizer heat exchanger 20 to a convergent point Y in the intermediate refrigerant tube 22.

The connecting tube 74g leads refrigerant through the economizer heat exchanger 20 to a connecting tube 75g. This connecting tube 75g is connected to the expansion mechanism 5.

The refrigerant that has passed through the liquid-side liquid-gas heat exchanger 8L and the refrigerant that has passed through the economizer heat exchanger 20 mix together at a convergent point L and flow into the usage-side heat exchanger 6 via the connection tube 76.

The control unit 99 can switch between the economizer state, the liquid-gas state, and the dual-function non-usage stage by adjusting the connection state of the switching three-way valve 28C and the opening degree of the economizer expansion mechanism 9e.

The configuration otherwise has the same specifics as those described in the above-described water heater 1 of the first embodiment, the water heater 201 of the second embodiment, and/or the water heater 301 of the third embodiment.

### <4-2> Action of the Air-Conditioning Apparatus

Next, the action of the water heater 401 of the fourth embodiment will be described using FIGS. 18, 19, and 20.

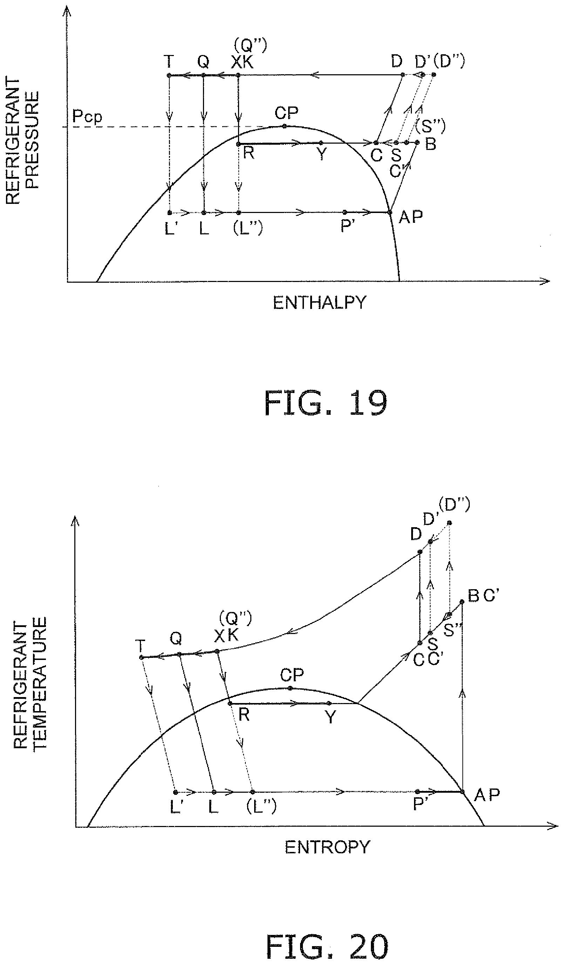

FIG. 19 is a pressure-enthalpy graph representing the refrigeration cycle, and FIG. 20 is a temperature-entropy graph representing the refrigeration cycle.

Between the specific enthalpy at point Q in the economizer state and the specific enthalpy at point T in the liquid-gas state, whichever has the greater value changes depending on the opening degree of the expansion mechanism 5 and/or the expansion mechanism 95e, and these specific enthalpies are therefore not limited to the examples shown in FIGS. 19 and 20.

### (Economizer State)

In the economizer state, the control unit 99 switches the connection state of the switching three-way valve 28C so that refrigerant does not flow to the connecting tube 73 but refrigerant does flow to the liquid-gas bypass tube 8B, increases the opening degree of the economizer expansion mechanism 9e, and performs the refrigeration cycle so that the refrigerant flows to the economizer circuit 9. The same refrigeration cycle as in the economizer usage state in Embodiment 3 described above is performed here, as shown by points A, B, C, D, K, X, R, Y, Q, L, and P in FIGS. 18,19, and 20.

The specific enthalpy of the refrigerant flowing through the connecting tube 75g into the expansion mechanism 5 herein can be lowered by heat exchange in the economizer heat exchanger 20, and the refrigerating capacity of the refrigeration cycle can be improved to bring the coefficient of performance to a satisfactory value. Furthermore, the degree of superheating of the refrigerant drawn into the high-stage compression element 2d can be further reduced by the refrigerant passing through the economizer circuit 9 and mixing at the convergent point Y of the intermediate refrigerant tube 22, rather than by the intercooler 7 alone, the density of the refrigerant drawn into the compression element 2d can be raised to improve compression efficiency, and abnormal increases in the discharged refrigerant temperature can be prevented. At this time, injection into the intermediate refrigerant tube 22 via the economizer circuit 9 makes it possible to increase the quantity of refrigerant supplied to the heat source-side heat exchanger 4 and to increase the quantity of heat supplied as well.

### (Liquid-gas State)

In the liquid-gas state, the control unit 99 switches the connection state of the switching three-way valve 28C so that refrigerant does not flow to the liquid-gas bypass tube 8B but does flow to the connecting tube 73, and performs a refrigeration cycle that makes the liquid-gas heat exchanger 8 function. The same refrigeration cycle as in the liquid-gas usage connection state in Embodiment 2 described above is performed here, as shown by points A, B, C', D, K, T, L', and P' in FIGS. 18, 19, and 20.

The specific enthalpy of the refrigerant flowing into the expansion mechanism 95e here can be lowered; therefore, the refrigerating capacity in the refrigeration cycle can be improved to bring the coefficient of performance to a satisfactory value, a degree of superheating can be guaranteed in the refrigerant drawn into the low-stage compression element 2c to prevent liquid compression, and the discharge temperature can be increased to guarantee the heat quantity required in the heat source-side heat exchanger 4.

### (Dual-function Non-usage State)

In the dual-function non-usage state, the control unit 99 switches the connection state of the switching three-way valve 28C so that refrigerant does not flow to the connecting tube 73 but does flow to the liquid-gas bypass tube 8B, fully closes the economizer expansion mechanism 9e, and performs the refrigeration cycle so that neither the economizer circuit 9 nor the liquid-gas heat exchanger 8 are used. A simple refrigeration cycle is performed here, as shown by points A, B, C, D", K, X, Q", L", and P in FIGS. 18, 19, and 20.

Since the temperature of the refrigerant discharged from the high-stage compression element 2d can be increased here, it is possible to supply the required heat quantity even in cases in which the radiated heat quantity required in the heat source-side heat exchanger 4 has increased.

### (Switching Control of Economizer State, Liquid-gas State, and Dual-function Non-usage State)

The control unit 99 performs a control for switching the above-described states such that the first priority is that the discharged refrigerant temperature be within a range of not increasing abnormally and the discharged refrigerant pressure be a pressure equal to or less than the pressure capacity of the low-stage compression element 2c and the high-stage compression element 2d, the second priority is that the output water temperature and output water quantity requested by the user be achieved, and the third priority is that the operating efficiency be satisfactory (that an appropriate balance can be established between improving the coefficient of performance and increasing compression efficiency).

That is, in cases in which the radiated heat quantity of the refrigerant in the heat source-side heat exchanger 4 is insufficient, control is performed such that the liquid-gas state goes into effect if the discharge temperature is within a range of not increasing abnormally, and the dual-function non-usage state goes into effect if an abnormal increase in the discharge temperature is avoided. In cases in which the heat radiation quantity in the heat source-side heat exchanger 4 is sufficient, the economizer state goes into effect, the opening degree of the economizer expansion mechanism 9e is controlled, the valve opening degree is increased within a margin whereby the heat radiation quantity required in the heat source-side heat exchanger 4 can be supplied, the coefficient of performance is brought to a satisfactory value by improving the refrigerating capacity of the refrigeration cycle, and control is performed for increasing the supplied heat quantity by increasing the quantity of refrigerant that can be supplied to the heat source-side heat exchanger 4.

The heat radiation quantity herein is determined by the control unit 99 on the basis of the temperature sensed by the water temperature sensor 910T, as well as the output water temperature and the output water quantity required by the user. Whether or not the discharge temperature has increased abnormally is determined by the control unit 99 on the basis of (the evaporation temperature established corresponding to) the temperature sensed by the usage-side temperature sensor 6T.

### <4-3> Modification 1

In the embodiment described above, an example was described of a case in which the control unit 99 performs a control for switching between the economizer state, the liquid-gas state, and the dual-function non-usage state.

However, the present invention is not limited to this example; another possibility is to allow the use of a dual-usage state in which the economizer circuit 9 is used while the liquid-gas heat exchanger 8 is used as well, for example.

On the preconditions that the discharged refrigerant temperature of the high-stage compression element 2d be within a range of not increasing abnormally, the discharged refrigerant pressure be one equal to or less than the pressure capacity of the low-stage compression element 2c and the high-stage compression element 2d, and it be possible to supply the output water temperature and output water quantity requested by the user, for example, the control unit 99 herein may control the ratio between the flow rate of refrigerant flowing through the economizer circuit 9 and the flow rate of the liquid-gas heat exchanger 8L while refrigerant is flowing simultaneously to both the economizer circuit 9 and the liquid-gas heat exchanger 8L, rather than simply alternately switching the connection state of the switching three-way valve 28C, so that the operating efficiency can be made satisfactory (an appropriate balance can be established between improving the coefficient of performance and increasing compression efficiency). The configuration which can adjust the ratio herein is not limited to the switching three-way valve 28C, and an expansion mechanism may be provided immediately ahead of the liquid-gas heat exchanger 8L to perform flow rate ratio control, for example.

For the ratio between the flow rate in the economizer circuit 9 and the flow rate in the liquid-gas heat exchanger 8, the control unit 99 herein ensures that the discharged refrigerant temperature of the high-stage compression element 2d is within a range of not increasing abnormally (under conditions such as the temperature of the refrigerant discharged from the high-stage compression element 2d being equal to or less than a predetermined temperature) when the target evaporation temperature is established based on the temperature sensed by the usage-side temperature sensor 6T, and also that the discharged refrigerant pressure is equal to or less than the pressure capacity of the low-stage compression element 2c and the high-stage compression element 2d; and the control unit 99 calculates a heat quantity sufficient to guarantee the output water temperature and output water quantity requested by the user.

Assuming that the flow rate of the economizer circuit 9 is zero, for example, the control unit 99 then calculates a flow rate of the liquid-gas heat exchanger 8L needed in order to guarantee a radiated heat quantity, whereby abnormal increases in the discharged refrigerant temperature at the target evaporation temperature can be prevented, and the discharge pressure is equal to or less than a predetermined pressure corresponding to the pressure capacity of the low-stage compression element 2c and the high-stage compression element 2d. Next, while reducing this calculated flow rate in the liquid-gas heat exchanger 8L and assuming that refrigerant equivalent to the reduced flow rate has flowed to the economizer circuit 9, the control unit 99 controls the flow rate ratio so that the respective compression ratios of the low-stage compression element 2c and the high-stage compression element 2d are within a predetermined range and the coefficient of performance is within a predetermined range, while taking into account the decrease in the refrigerating capacity resulting from the increase in specific enthalpy accompanying the decrease in the flow rate of the liquid-gas heat exchanger 8, the increase in the refrigerating capacity resulting from the decrease in specific enthalpy accompanying the increase in the flow rate of the economizer circuit 9, the increase in the compression ratio of the compression mechanism resulting from the high pressure increasing in order to guarantee the heat radiation quantity by increasing the flow rate of the economizer circuit 9, and the increase in the supplied heat amount accompanying the increase in the refrigerant density supplied to the heat source-side heat exchanger 4 resulting from the increase in the flow rate of the economizer circuit 9.

For example, in this flow rate control by the control unit 99, an intermediate pressure at which the compression ratio of the low-stage compression element 2c and the compression ratio of the high-stage compression element 2d are equal may be calculated as the intermediate pressure for minimizing the compression work, and the economizer expansion mechanism 9e may be controlled so that the extent of depressurization in the economizer expansion mechanism 9e yields this intermediate pressure (and pressures within a predetermined range from this intermediate pressure), whereupon the flow rate ratio in the switching three-way valve 28C may be adjusted so that the coefficient of performance is satisfactory.

### <4-4> Modification 2

In the embodiment described above, an example was described in which the control unit 99 switches the opening degree of the switching three-way valve 28C and/or the economizer expansion mechanism 9e on the basis of the temperature sensed by the usage-side temperature sensor 6T (on the basis of the established target evaporation temperature).

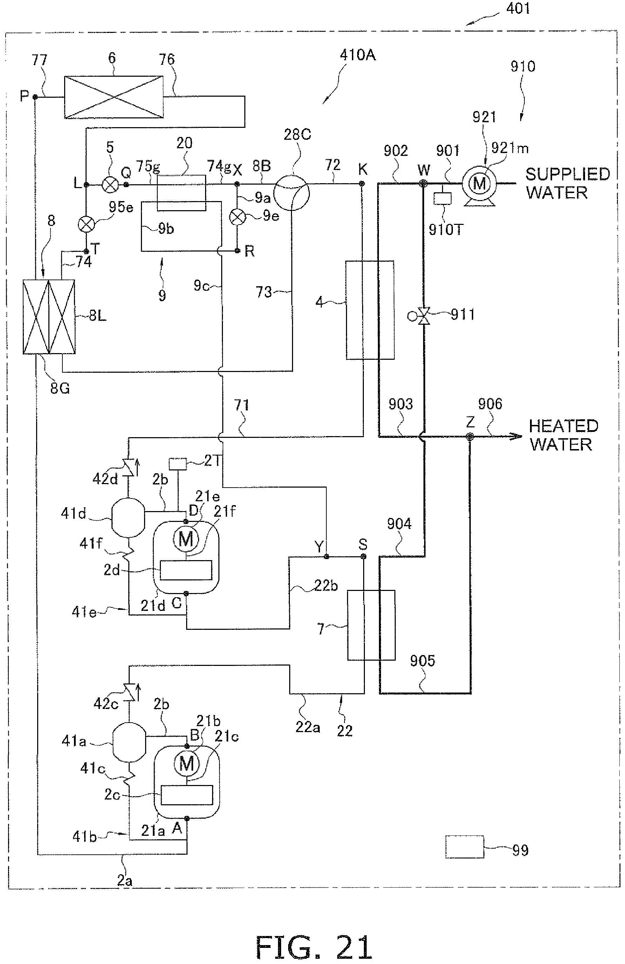

However, the present invention is not limited to this example; another possibility is to use a refrigerant circuit 410A having a discharged refrigerant temperature sensor 2T for sensing the temperature of the refrigerant discharged from the high-stage compression element 2d, instead of the usage-side temperature sensor 6T, as shown in FIG. 21, for example.

With this discharged refrigerant temperature sensor 2T, an increase in the temperature sensed by the usage-side temperature sensor 6T described above corresponds to a decrease in the temperature sensed by the discharged refrigerant temperature sensor 2T, and a decrease in the temperature sensed by the usage-side temperature sensor 6T described above corresponds to an increase in the temperature sensed by the discharged refrigerant temperature sensor 2T.

### <4-5> Modification 3

In the embodiment described above, an example was described of a case in which the connection state of the switching three-way valve 28C is switched to switch between the liquid-gas state, the economizer state, and the dual-function non-usage state.

However, the present invention is not limited to this example; another possibility is to use a refrigerant circuit which has an on/off valve provided to the connecting tube 73g and an on/off valve also provided to the connecting tube 73, instead of the switching three-way valve 28C, for example.

### <4-6> Modification 4

In the embodiment described above, an example was described of a refrigerant circuit 410 provided with both an expansion mechanism 5 and an expansion mechanism 95e.

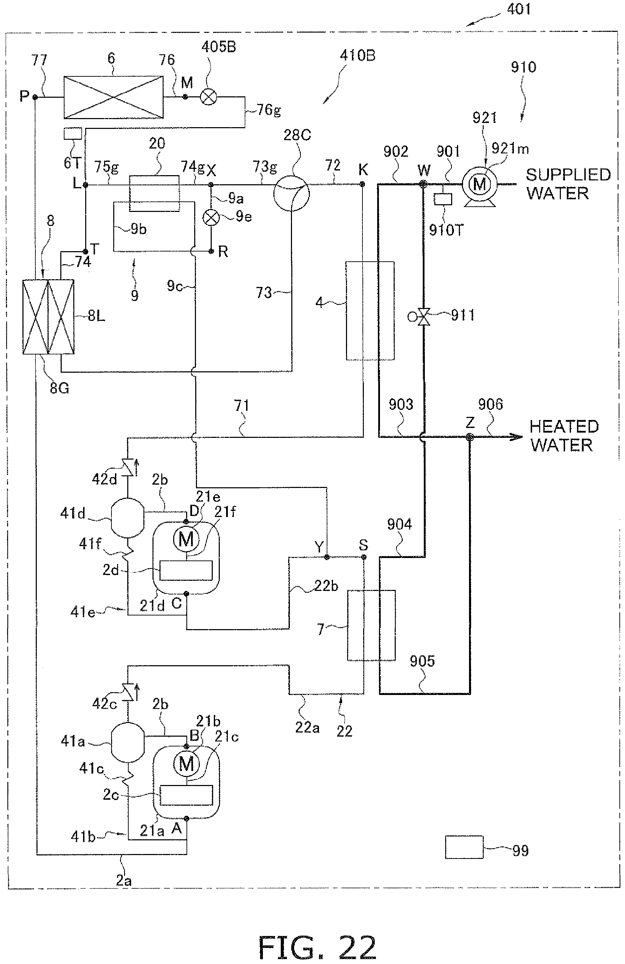

However, the present invention is not limited to this example; another possibility is to use a refrigerant circuit 410B having a dual-use expansion mechanism 405B which can be used both in control during the economizer state and control during the liquid-gas state, as shown in FIG. 22, for example. This dual-use expansion mechanism 405B is provided at an intermediate point in a connecting tube 76g extending from the convergent point L to the usage-side heat exchanger 6.

In this case, the number of expansion mechanisms can be reduced to fewer than that of the refrigerant circuit 410 in the fourth embodiment described above.

### <4-7> Modification 5

In the embodiment described above, an example was described of a refrigerant circuit 410 in which the branching point X which branches in the economizer circuit 9 is bypassed by the liquid-gas heat exchanger 8.

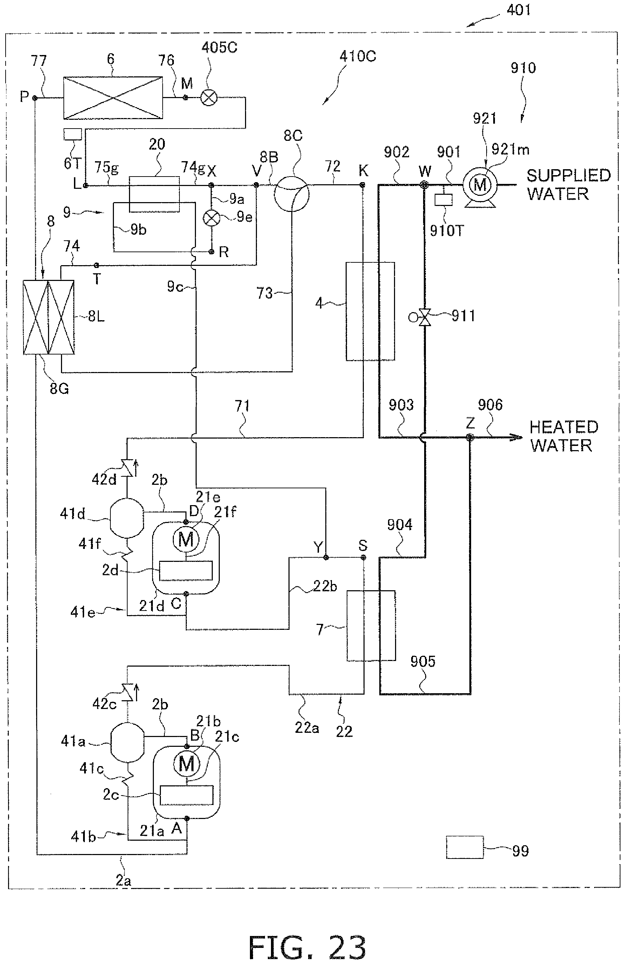

However, the present invention is not limited to this example; another possibility is to use a refrigerant circuit 410C in which the branching point X which branches in the economizer circuit 9 is provided between a dual-use expansion mechanism 405C and a convergent point V between the connecting tube 74 and the liquid-gas bypass tube 8B which extends from the liquid-gas three-way valve 8C for switching between the liquid-gas state and the economizer state, as shown in FIG. 23, for example.

### <4-8> Modification 6

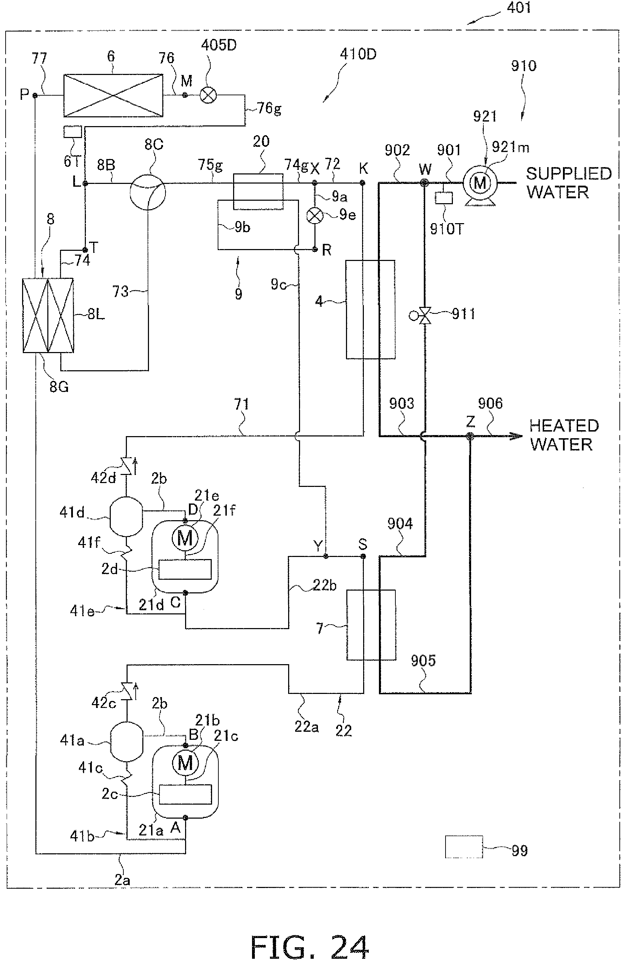

Furthermore, another possibility is to use a refrigerant circuit 410D in which the branching point X which branches in the economizer circuit 9 is provided between the liquid-gas three-way valve 8C and the heat source-side heat exchanger 4, as shown in FIG. 24.

In this refrigerant circuit 410D, the connection in the liquid-gas three-way valve 8C is switched between leading to the connecting tube 73 and leading to the liquid-gas bypass tube 8B. The refrigerant that has passed through the liquid-gas heat exchanger 8L then passes through the connecting tube 74 and mixes at the convergent point L with the liquid-gas bypass tube 8B. The connecting tube 76g and a dual-use expansion mechanism 405D are provided between this convergent point L and the usage-side heat exchanger 6.

### <4-9> Modification 7

In the embodiment described above, an example was described of a refrigerant circuit provided with only one two-stage compression mechanism, wherein refrigerant is compressed in two stages in the low-stage compression element 2c and the high-stage compression element 2d.

However, the present invention is not limited to this example; another possibility is to use a refrigerant circuit wherein the above-described two-stage compression mechanisms which perform compression in two stages are provided in parallel to each other, for example.

In the refrigerant circuit, a plurality of usage-side heat exchangers 6 may be disposed in parallel to each other. In this case, a refrigerant circuit may be used in which expansion mechanisms are disposed immediately ahead of the respective usage-side heat exchangers and the expansion mechanisms are also disposed in parallel to each other so that the quantity of refrigerant supplied to the usage-side heat exchangers 6 can be controlled.

### <4-10> Modification 8

In the embodiment described above, an example was described in which the low-stage compression element 2c and the high-stage compression element 2d were provided with the separate drive shafts 21c, 21f and the compressor drive motors 21b, 21e.

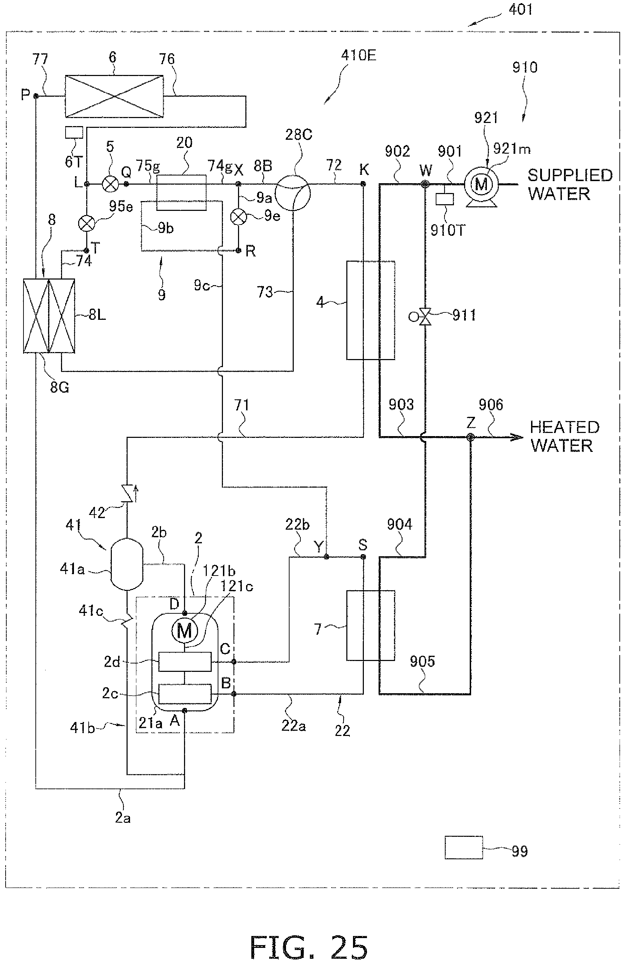

However, the present invention is not limited to this example; another possibility is a refrigerant circuit 410E which uses a compression mechanism 2 having a shared drive shaft 121c which is a drive shaft shared by the low-stage compression element 2c and the high-stage compression element 2d, wherein one shared compressor drive motor 121b is used to transmit drive force to the shared drive shaft 121c, as shown in FIG. 25, for example.

This compression mechanism 2 has a hermetically sealed structure in which the compressor drive motor 121b, the shared drive shaft 121c, and the compression elements 2c, 2d are housed within a casing 21a. The shared compressor drive motor 121b is linked to the shared drive shaft 121c. This shared drive shaft 121c is linked to the two compression elements 2c, 2d. That is, the compression mechanism has a so-called single-shaft two-stage compression structure in which the two compression elements 2c, 2d are linked to a single shared drive shaft 121c, and the two compression elements 2c, 2d are both rotatably driven by the shared compressor drive motor 121b. The compression elements 2c, 2d are rotary-type, scroll-type, or another type of positive displacement compression elements. The low-stage compression element 2c draws refrigerant in from an intake tube 2a, compresses the drawn-in refrigerant, and discharges the refrigerant toward the intermediate refrigerant tube 22. The intermediate refrigerant tube 22 connects the discharge side of the low-stage compression element 2c and the intake side of the high-stage compression element 2d via the intercooler 7. The high-stage compression element 2d further compresses the refrigerant drawn in via the intermediate refrigerant tube 22 and then discharges the refrigerant to the discharge tube 2b. In FIG 25, the discharge tube 2b is a refrigerant tube for feeding the refrigerant discharged from the compression mechanism 2 to the heat source-side heat exchanger 4, and the discharge tube 2b is provided with an oil separation mechanism 41 and a non-return mechanism 42. The oil separation mechanism 41 is a mechanism for separating the refrigerant from refrigeration oil which accompanies the refrigerant discharged from the compression mechanism 2 and returning the refrigeration oil to the intake side of the compression mechanism 2, and the oil separation mechanism 41 has primarily an oil separator 41a for separating the refrigerant from the refrigeration oil accompanying the refrigerant discharged from the compression mechanism 2, and an oil return tube 41b which is connected to the oil separator 41a and which returns the refrigeration oil separated from the refrigerant to the intake tube 2a of the compression mechanism 2. The oil return tube 41b is provided with a depressurization mechanism 41c for depressurizing the refrigeration oil flowing through the oil return tube 41b. A capillary tube is used as the depressurization mechanism 41c. The non-return mechanism 42 is a mechanism for allowing the flow of refrigerant from the discharge side of the compression mechanism 2 to the heat source-side heat exchanger 4 and blocking the flow of refrigerant from the heat source-side heat exchanger 4 to the discharge side of the compression mechanism 2, and a non-return valve is used.

Thus, the compression mechanism 2 has two compression elements 2c, 2d, and the compression mechanism 2 is configured so that refrigerant discharged from the first-stage compression element of these compression elements 2c, 2d is sequentially compressed by the second-stage compression element.

Since a single-shaft two-stage compression mechanism is used herein, the control unit 99 drives the low-stage compression element 2c and the high-stage compression element 2d while causing their centrifugal forces to cancel each other out to suppress vibrations and/or fluctuations in torque load, and the control unit 99 can perform control so that the operating capacity of the low-stage compression element 2c and the operating capacity of the high-stage compression element 2d are balanced, and the compression ratios are equal in the low-stage and high-stage elements.

### <5> Other Embodiments

Embodiments of the present invention and modifications thereof were described above based on the drawings, but the specific configuration is not limited to these embodiments and their modifications; other changes can be made within a range that does not deviate from the scope of the invention as defined by appended claims.

For example, in the embodiments and their modifications described above, the present invention may be applied to a so-called chiller-type air-conditioning apparatus in which water and/or brine is used as the heating source or cooling source for performing heat exchange with the refrigerant flowing through the usage-side heat exchanger 6, and a secondary heat exchanger is provided for performing heat exchange between indoor air and the water and/or brine that has undergone heat exchange in the usage-side heat exchanger 6.

The present invention can also be applied even to a refrigeration apparatus of a type different from the aforementioned chiller-type air-conditioning apparatus, such as a cooling-only air-conditioning apparatus or the like.

The refrigerant that operates in a supercritical range is not limited to carbon dioxide; ethylene, ethane, nitric oxide, and the like may also be used.

### INDUSTRIAL APPLICABILITY

In the refrigeration apparatus of the present invention, since compression efficiency can be more reliably improved in the refrigeration apparatus and the heating of the water for the hot water supply can be made more efficient, the refrigeration apparatus is particularly useful in cases in which the present invention is applied to a refrigeration apparatus which has multi-stage compression-type compression elements and which uses refrigerant that operates including the supercritical state process as the active refrigerant.

### REFERENCE SIGNS LIST

- 1: Air-conditioning apparatus (refrigeration apparatus)
- 2: Compression mechanism
- 4: Heat source-side heat exchanger
- 5: Expansion mechanism
- 6: Usage-side heat exchanger
- 7: Intercooler
- 8: Liquid-gas heat exchanger
- 10: Refrigerant circuit
- 20: Economizer heat exchanger
- 22: Intermediate refrigerant tube
- 99: Control unit
- 902, 903: Heat source water tubes
- 904, 905: Intermediate water tubes
- 910: Water circuit
- 911: Flow rate ratio adjustment mechanism

### CITATION LIST

### PATENT LITERATURE

<Patent Literature 1>
   Japanese Laid-open Patent Application No. 2007-232263
<Patent Literature 2>
   Japanese Laid-open Patent Application No. 2002-106988

## Claims

1. A refrigeration apparatus (1) comprising:
a water tube system (910) having a water inlet tube (901) for leading water supplied from the exterior to a water branching point (W), first branching water tubes (904, 905) and second branching water tubes (902, 903) extending from the water branching point (W), and a water outlet tube (906) leading out to the exterior from a convergent point (Z) where the first branching water tubes (904, 905) and the second branching water tubes (902, 903) converge, wherein active refrigerant is in a supercritical state in at least part of the refrigeration cycle; a main expansion mechanism (5) for depressurizing the refrigerant;
an evaporator (6) which is connected with the main expansion mechanism (5) and which evaporates refrigerant;
a first compression element (2c) for drawing in refrigerant that has passed through the evaporator (6) and for compressing and discharging the refrigerant;
a second compression element (2d) for drawing in the refrigerant discharged from the first compression element and for compressing and discharging the refrigerant;
a first refrigerant tube (22) for drawing the refrigerant discharged from the first compression element (2c) into the second compression element (2d);
a first heat exchanger (7) for performing heat exchange between the refrigerant passing through the first refrigerant tube (22) and the water flowing through the first branching water tubes (904, 905);
second refrigerant tubes (71, 72) connecting a discharge side of the second compression element (2d) to one end of a second heat exchanger (4) and the other end of the second heat exchanger (4) to the main expansion mechanism (5); so that , during operation,
the second heat exchanger (4) subjects the refrigerant passing through the second refrigerant tubes (71, 72) to heat exchange with the water flowing through the second branching water tubes (902, 903), and not to heat exchange with the water flowing through the water inlet tube (901), whereby said water flowing through the first branching water tubes (904, 905) is not being heated by heat exchange with the refrigerant before flowing into the first heat exchanger (7) and said water flowing through the second branching water tubes (902, 903) is not being heated by heat exchange with the refrigerant before flowing into the second heat exchanger (4)

2. The refrigeration apparatus (1) according to claim 1, further comprising:
a flow rate ratio adjustment mechanism (911) capable of adjusting a ratio between a quantity of water flowing through the first branching water tubes (904, 905) and a quantity of water flowing through the second branching water tubes (902, 903) .

3. The refrigeration apparatus (1) according to claim 2, further comprising:
a heating capacity detection unit (4T, 4P, 7T, 7P) capable of detecting a capacity of the refrigerant passing through the first heat exchanger (7) to heat the water and a capacity of the refrigerant passing through the second heat exchanger (4) to heat the water; and
a water distribution quantity control unit (99) for adjusting the ratio between the quantity of water flowing through the first branching water tubes (904, 905) and the quantity of water flowing through the second branching water tubes (902, 903) by controlling the flow rate adjustment mechanism (911) in accordance with a ratio between the heating capacities of the first heat exchanger (7) and the second heat exchanger (4) detected by the heating capacity detection unit (4T, 4P, 7T, 7P).

4. The refrigeration apparatus (201) according to any of claims 1 through 3, wherein
the second refrigerant tubes (71, 72) have a third refrigerant tube (72) for connecting the second heat exchanger (4) and the main expansion mechanism (5);
the refrigeration apparatus further comprising:
a fourth refrigerant tube (77, 2a) for connecting the evaporator (6) and an intake side of the first compression element (2c);
a third heat exchanger (8, 8L, 8G) for performing heat exchange between the refrigerant flowing through the third refrigerant tube (72) and the refrigerant flowing through the fourth refrigerant tube (77, 2a);
a third heat exchange bypass tube (8B) for connecting one end and another end of a portion of the third refrigerant tube (72) that passes through the third heat exchanger (8, 8L); and
a heat exchanger switching mechanism (8C) capable of switching between a state in which refrigerant flows through the portion of the third refrigerant tube (72) that passes through the third heat exchanger (8, 8L), and a state in which refrigerant flows through the third heat exchange bypass tube (8B).

5. The refrigeration apparatus (201) according to claim 4, further comprising:
temperature sensory units (2T, 6T) for sensing at least an air temperature surrounding the evaporator (6) or a discharged refrigerant temperature of at least the first compression element (2c) or the second compression element (2d); and
a heat exchange quantity control unit (99) for controlling the heat exchanger switching mechanism (8C) and increasing the quantity of refrigerant flowing through the portion of the third refrigerant tube (72) that passes through the third heat exchanger (8, 8L) when the following condition is fulfilled:
the air temperature is higher than a predetermined high-temperature air temperature when a value sensed by the temperature sensory units (2T, 6T) is an air temperature, or the refrigerant temperature is lower than a predetermined low-temperature refrigerant temperature when the value sensed by the temperature sensory units (2T, 6T) is a refrigerant temperature.

6. The refrigeration apparatus (301) according to any of claims 1 through 3, wherein
the second refrigerant tubes (71, 72) have a third refrigerant tube (72) connecting the second heat exchanger (4) and the main expansion mechanism (5);
the refrigeration apparatus further comprising:
a branching expansion mechanism (9e) for depressurizing refrigerant;
a fifth refrigerant tube (9a) which branches off from the third refrigerant tube (72) and extends to the branching expansion mechanism (9e);
sixth refrigerant tubes (9b, 9c) extending from the branching expansion mechanism (9e) to the first refrigerant tube (22); and
a fourth heat exchanger (20) for performing heat exchange between refrigerant flowing through the third refrigerant tube (72) and refrigerant flowing through the sixth refrigerant tubes (9b, 9c).

7. The refrigeration apparatus (301) according to claim 6, further comprising:
temperature sensory units (6T, 2T) for sensing at least the air temperature surrounding the evaporator (6) or the discharged refrigerant temperature of at least the first compression element (2c) or the second compression element (2d); and
a branched quantity control unit (99) for controlling the branching expansion mechanism (9e) and increasing the quantity of refrigerant passing through when the following condition is fulfilled:
the air temperature is lower than a predetermined low-temperature air temperature when the value sensed by the temperature sensory units (6T, 2T) is an air temperature, or the refrigerant temperature is higher than a predetermined high-temperature refrigerant temperature when the value sensed by the temperature sensory units (6T, 2T) is a refrigerant temperature.

8. The refrigeration apparatus (301) according to claim 6 or 7, further comprising:
a water temperature sensory unit (910T) for sensing a temperature of water flowing through any position in the water tube system (910);
a first refrigerant temperature sensory unit (22T) for sensing a temperature of refrigerant passing through the first refrigerant tube (22); and
a refrigerant distribution quantity control unit (99) for controlling the branching expansion mechanism (9e) and increasing the quantity of refrigerant passing through when the difference between the temperature sensed by the water temperature sensory unit (910T) and the temperature sensed by the first refrigerant temperature sensory unit (22T) is less than a predetermined value.

9. The refrigeration apparatus (401) according to any of claims 1 through 3, wherein
the second refrigerant tubes (71, 72) have a third refrigerant tube (72) connecting the second heat exchanger (4) and the main expansion mechanism (5); the refrigeration apparatus further comprising:
a branching expansion mechanism (9e) for depressurizing refrigerant;
fourth refrigerant tubes (77, 2a) connecting the evaporator (6) and an intake side of the first compression element (2c);
a third heat exchanger (8, 8L, 8G) for performing heat exchange between refrigerant flowing through the third refrigerant tube (72) and refrigerant flowing through the fourth refrigerant tubes (77, 2a);
a fifth refrigerant tube (9a) which branches off from the third refrigerant tube (72) and extends to the branching expansion mechanism (9e);
sixth refrigerant tubes (9b, 9c) connecting the branching expansion mechanism (9e) and the first refrigerant tube (22); and
a fourth heat exchanger (20) for performing heat exchange between refrigerant flowing through the third refrigerant tube (72) and refrigerant flowing through the sixth refrigerant tubes (9b, 9c).

10. The refrigeration apparatus (401) according to claim 9, further comprising:
temperature sensory units (6T, 2T) for sensing at least the air temperature surrounding the evaporator (6) or the discharged refrigerant temperature of at least the first compression element (2c) or the second compression element (2d); and
a branched heat quantity control unit (99) for controlling the branching expansion mechanism (9e) and increasing the quantity of refrigerant passing through when the following condition is fulfilled: the air temperature is lower than a predetermined low-temperature air temperature when the value sensed by the temperature sensory units (6T, 2T) is an air temperature, or the refrigerant temperature is higher than a predetermined high-temperature refrigerant temperature when the value sensed by the temperature sensory units (6T, 2T) is a refrigerant temperature.

11. The refrigeration apparatus (401) according to claim 9 or 10, further comprising:
a first heat exchange bypass tube connecting one end and another end of the portion of the first refrigerant tube (22) that passes through the first heat exchanger (7); and
a bypass switching mechanism capable of switching between a state in which refrigerant flows through the portion of the first refrigerant tube (22) that passes through the first heat exchanger (7), and a state in which refrigerant flows through the first heat exchange bypass tube.

12. The refrigeration apparatus (401) according to claim 11, further comprising:
temperature sensory units (6T, 2T) for sensing at least the air temperature surrounding the evaporator (6) or the discharged refrigerant temperature of at least the first compression element (2c) or the second compression element (2d); and
a bypass control unit (99) for controlling the bypass switching mechanism and increasing the quantity of refrigerant flowing through the portion of the first refrigerant tube that passes through the first heat exchanger when the following condition is fulfilled:
the air temperature is higher than a predetermined high temperature air temperature when the value sensed by the temperature sensory units (6T, 2T) is an air temperature, or the refrigerant temperature is lower than a predetermined low-temperature refrigerant temperature when the value sensed by the temperature sensory units (6T, 2T) is a refrigerant temperature.

13. The refrigeration apparatus (401) according to any of claims 9 through 12, further comprising:
a water temperature sensory unit (910T) for sensing the temperature of water flowing through any position in the water tube system (910);
a first refrigerant temperature sensory unit (22T) for sensing the temperature of refrigerant passing through the first refrigerant tube (22); and
a water-correspondent refrigerant quantity control unit (99) for controlling the branching expansion mechanism (9e) and increasing the quantity of refrigerant passing through when the difference between the temperature sensed by the water temperature sensory unit (910T) and the temperature sensed by the first refrigerant temperature sensory unit (22T) is less than a predetermined value.

14. The refrigeration apparatus (1, 201, 301, 401) according to any of claims 1 through 13, further comprising:
a first drive unit for driving the first compression element (2c); and
a second drive unit for driving the second compression element (2d) independently of the first compression element.

15. The refrigeration apparatus (1, 201, 301, 401) according to any of claims 1 through 13, wherein
the first compression element (2c) and the second compression element (2d) have a shared rotating shaft (21c) for performing compression work by rotatably driving each of the compression elements.

16. The refrigeration apparatus (1, 201, 301, 401) according to any of claims 1 through 15, wherein
the active refrigerant is carbon dioxide.

## Patentansprüche

1. Kühlvorrichtung (1), umfassend:
ein Wasserrohrsystem (910), das ein Wassereinlassrohr (901) aufweist zum Führen von Wasser, zugeführt von außen an einen Wasserverzweigungspunkt (W), erste Verzweigungswasserrohre (904, 905) und zweite Wasserverzweigungsrohre (902, 903), die sich von dem Wasserverzweigungspunkt (W) erstrecken, und ein Wasserauslassrohr (906), das von einem Konvergenzpunkt (Z) nach außen führt, wo die ersten Verzweigungswasserrohre (904, 905) und die zweiten Verzweigungswasserrohre (902, 903) konvergieren, wobei ein aktives Kältemittel in mindestens einem Teil des Kühlkreislaufs in einem superkritischen Zustand ist; einen Hauptexpansionsmechanismus (5) zur Druckentlastung des Kältemittels;
einen Verdampfer (6), der verbunden ist mit dem Hauptexpansionsmechanismus (5) und der Kältemittel verdampft;
ein erstes Kompressionselement (2c) zum Einziehen von Kältemittel, das durch den Verdampfer (6) gelaufen ist, und zum Komprimieren und Ablassen des Kältemittels;
ein zweites Kompressionselement (2d) zum Einziehen des Kältemittels, abgelassen aus dem ersten Kompressionselement, und zum Komprimieren und Ablassen des Kältemittels;
ein erstes Kältemittelrohr (22) zum Ziehen des Kältemittels, abgelassen aus dem ersten Kompressionselement (2c), in das zweite Kompressionselement (2d);
einen ersten Wärmetauscher (7) zum Durchführen von Wärmetausch zwischen dem Kältemittel, das durch das erste Kältemittelrohr (22) läuft, und dem Wasser, das durch die ersten Verzweigungswasserrohre (904, 905) läuft;
zweite Kältemittelrohre (71, 72), die eine Ablassseite des zweiten Kompressionselements (2d) mit einem Ende eines zweiten Wärmetauschers (4) und das andere Ende des zweiten Wärmetauschers (4) mit dem Hauptexpansionsmechanismus (5) verbinden; sodass, während des Betriebs,
der zweite Wärmetauscher (4) das Kältemittel, das durch die zweiten Kältemittelrohre (71, 72) läuft, einem Wärmetausch mit dem Wasser unterwirft, das durch die zweiten Verzweigungswasserrohre (902, 903) fließt, und nicht einem Wärmetausch mit dem Wasser, das durch das Wassereinlassrohr (901) fließt, wobei das Wasser, das durch die ersten Verzweigungswasserrohre (904, 905) fließt, nicht mittels Wärmetausches mit dem Kältemittel vor dem Fließen in den ersten Wärmetauscher (7) erwärmt wird und wobei das Wasser, das durch die zweiten Verzweigungswasserrohre (902, 903) fließt, nicht mittels Wärmetausches mit dem Kältemittel vor dem Fließen in den zweiten Wärmetauscher (4) erwärmt wird.

2. Kühlvorrichtung (1) nach Anspruch 1, weiter umfassend:
einen Flussratenverhältnisanpassungsmechanismus (911), der in der Lage ist, ein Verhältnis zwischen einer Menge von Wasser, die durch die ersten Verzweigungswasserrohre (904, 905) fließt, und einer Menge von Wasser, die durch die zweiten Verzweigungswasserrohre (902, 903) fließt, anzupassen.

3. Kühlvorrichtung (1) nach Anspruch 2, weiter umfassend:
eine Erwärmungskapazitätsdetektionseinheit (4T, 4P, 7T, 7P), die in der Lage ist, eine Kapazität von Kältemittel zu detektieren, das durch den ersten Wärmetauscher (7) läuft, um das Wasser zu erwärmen, und eine Kapazität des Kältemittels, das durch den zweiten Wärmetauscher (4) läuft, um das Wasser zu erwärmen; und
eine Wasserverteilungsmengensteuereinheit (99) zum Anpassen des Verhältnisses zwischen der Menge von Wasser, die durch die ersten Verzweigungswasserrohre (904, 905) fließt, und der Menge von Wasser, die durch die zweiten Verzweigungswasserrohre (902, 903) fließt, mittels Steuerns des Flussratenanpassungsmechanismus (911) in Übereinstimmung mit einem Verhältnis zwischen den Erwärmungskapazitäten des ersten Wärmetauschers (7) und des zweiten Wärmetauschers (4), detektiert mittels der Erwärmungskapazitätsdetektionseinheit (4T, 4P, 7T, 7P).

4. Kühlvorrichtung (201) nach einem der Ansprüche 1 bis 3, wobei
die zweiten Kältemittelrohre (71, 72) ein drittes Kältemittelrohr (72) zum Verbinden des zweiten Wärmetauschers (4) und des Hauptexpansionsmechanismus (5) aufweisen;
wobei die Kühlvorrichtung weiter umfasst:
ein viertes Kältemittelrohr (77, 2a) zum Verbinden des Verdampfers (6) und einer Einlassseite des ersten Kompressionselements (2c);
einen dritten Wärmetauscher (8, 8L, 8G) zum Durchführen von Wärmetausch zwischen dem Kältemittel, das durch das dritte Kältemittelrohr (72) fließt, und dem Kältemittel, das durch das vierte Kältemittelrohr (77, 2a) fließt;
ein drittes Wärmetauschbypassrohr (8B) zum Verbinden eines Endes und eines anderen Endes eines Abschnitts des dritten Kältemittelrohrs (72), das durch den dritten Wärmetauscher (8, 8L) läuft; und
einen Wärmetauscherschaltungsmechanismus (8C), der in der Lage ist, zwischen einem Zustand, in dem Kältemittel durch den Abschnitt des dritten Kältemittelrohrs (72) fließt, das durch den dritten Wärmetauscher (8, 8L) läuft, und einem Zustand, in dem Kältemittel durch das dritte Wärmetauscherbypassrohr (8B) fließt, zu schalten.

5. Kühlvorrichtung (201) nach Anspruch 4, weiter umfassend:
Temperaturerfassungseinheiten (2T, 6T) zum Erfassen mindestens einer Lufttemperatur, die den Verdampfer (6) umgibt, oder einer abgelassenen Kältemitteltemperatur von mindestens dem ersten Kompressionselement (2c) oder dem zweiten Kompressionselement (2d); und
einer Wärmetauschmengensteuereinheit (99) zum Steuern des Wärmetauscherschaltungsmechanismus (8C) und Erhöhen der Menge von Kältemittel, das durch den Abschnitt des dritten Kältemittelrohrs (72) fließt, das durch den dritten Wärmetauscher (8, 8L) läuft, wenn die folgende Bedingung erfüllt ist:
die Lufttemperatur höher ist als eine vorbestimmte Hochtemperatur-Lufttemperatur, wenn ein Wert, erfasst mittels der Temperaturerfassungseinheiten (2T, 6T), eine Lufttemperatur ist, oder die Kältemitteltemperatur niedriger ist als eine vorbestimmte Niedrigtemperatur-Kältemitteltemperatur, wenn der Wert, erfasst mittels der Temperaturerfassungseinheiten (2T, 6T), eine Kältemitteltemperatur ist.

6. Kühlvorrichtung (301) nach einem der Ansprüche 1 bis 3, wobei
die zweiten Kältemittelrohre (71, 72) ein drittes Kältemittelrohr (72) aufweisen, verbunden mit dem zweiten Wärmetauscher (4) und dem Hauptexpansionsmechanismus (5);
wobei die Kühlvorrichtung weiter umfasst:
einen Verzweigungsexpansionsmechanismus (9e) zur Druckentlastung von Kältemittel;
ein fünftes Kältemittelrohr (9a), das von dem dritten Kältemittelrohr (72) abzweigt, und sich in den Verzweigungsexpansionsmechanismus (9e) erstreckt;
sechste Kältemittelrohre (9b, 9c), die sich von dem Verzweigungsexpansionsmechanismus (9e) in das erste Kältemittelrohr (22) erstrecken; und
einen vierten Wärmetauscher (20) zum Durchführen von Wärmetausch zwischen Kältemittel, das durch das dritte Kältemittelrohr (72) fließt, und Kältemittel, das durch die sechsten Kältemittelrohre (9b, 9c) fließt.

7. Kühlvorrichtung (301) nach Anspruch 6, weiter umfassend:
Temperaturerfassungseinheiten (6T, 2T) zum Erfassen von mindestens der Lufttemperatur, die den Verdampfer (6) umgibt, oder der abgelassenen Kältemitteltemperatur von mindestens dem ersten Kompressionselement (2c) oder dem zweiten Kompressionselement (2d); und
eine Verzweigungsmengensteuereinheit (99) zum Steuern des Verzweigungsexpansionsmechanismus (9e) und Erhöhen der Menge von Kältemittel, die durchläuft, wenn die folgende Bedingung erfüllt ist:
die Lufttemperatur niedriger ist als eine vorbestimmte Niedrigtemperatur-Lufttemperatur, wenn der Wert, erfasst mittels der Temperaturerfassungseinheiten (6T, 2T), eine Lufttemperatur ist, oder die Kältemitteltemperatur höher ist als eine vorbestimmte Hochtemperatur-Kältemitteltemperatur, wenn der Wert, erfasst mittels der Temperaturerfassungseinheiten (6T, 2T), eine Kältemitteltemperatur ist.

8. Kühlvorrichtung (301) nach Anspruch 6 oder 7, weiter umfassend:
eine Wassertemperaturerfassungseinheit (910T) zum Erfassen einer Temperatur von Wasser, das durch irgendeine Position in dem Wasserrohrsystem (910) fließt;
eine erste Kältemitteltemperaturerfassungseinheit (22T) zum Erfassen einer Temperatur von Kältemittel, das durch das erste Kältemittelrohr (22) läuft; und
eine Kältemittelverteilungsmengensteuereinheit (99) zum Steuern des Verzweigungsexpansionsmechanismus (9e) und Erhöhen der Menge von Kältemittel, die durchläuft, wenn die Differenz zwischen der Temperatur, erfasst mittels der Wassertemperaturerfassungseinheit (910T), und der Temperatur, erfasst mittels der ersten Kältemitteltemperaturerfassungseinheit (22T), weniger als ein vorbestimmter Wert ist.

9. Kühlvorrichtung (401) nach einem der Ansprüche 1 bis 3, wobei
die zweiten Kältemittelrohre (71, 72) ein drittes Kältemittelrohr (72) aufweisen, das den zweiten Wärmetauscher (4) und den Hauptexpansionsmechanismus (5) verbindet; wobei die Kühlvorrichtung weiter umfasst:
einen Verzweigungsexpansionsmechanismus (9e) zur Druckentlastung des Kältemittels;
vierte Kältemittelrohre (77, 2a), die den Verdampfer (6) und eine Einlassseite des ersten Kompressionselements (2c) verbinden;
einen dritten Wärmetauscher (8, 8L, 8G) zum Durchführen von Wärmetausch zwischen Kältemittel, das durch das dritte Kältemittelrohr (72) fließt, und Kältemittel, das durch die vierten Kältemittelrohre (77, 2a) fließt;
ein fünftes Kältemittelrohr (9a), das von dem dritten Kältemittelrohr (72) abzweigt, und sich in den Verzweigungsexpansionsmechanismus (9e) erstreckt;
sechste Kältemittelrohre (9b, 9c), die den Verzweigungsexpansionsmechanismus (9e) und das erste Kältemittelrohr (22) verbinden; und
einen vierten Wärmetauscher (20) zum Durchführen von Wärmetausch zwischen Kältemittel, das durch das dritte Kältemittelrohr (72) fließt, und Kältemittel, das durch die sechsten Kältemittelrohre (9b, 9c) fließt.

10. Kühlvorrichtung (401) nach Anspruch 9, weiter umfassend:
Temperaturerfassungseinheiten (6T, 2T) zum Erfassen von mindestens der Lufttemperatur, die den Verdampfer (6) umgibt, oder der abgelassenen Kältemitteltemperatur von mindestens dem ersten Kompressionselement (2c) oder dem zweiten Kompressionselement (2d); und
eine Verzweigungswärmemengensteuereinheit (99) zum Steuern des Verzweigungsexpansionsmechanismus (9e) und Erhöhen der Menge von Kältemittel, die durchläuft, wenn die folgende Bedingung erfüllt ist: die Lufttemperatur niedriger ist als eine vorbestimmte Niedrigtemperatur-Lufttemperatur, wenn der Wert, erfasst mittels der Temperaturerfassungseinheiten (6T, 2T), eine Lufttemperatur ist, oder die Kältemitteltemperatur höher ist als eine vorbestimmte Hochtemperatur-Kältemitteltemperatur, wenn der Wert, erfasst mittels der Temperaturerfassungseinheiten (6T, 2T), eine Kältemitteltemperatur ist.

11. Kühlvorrichtung (401) nach Anspruch 9 oder 10, weiter umfassend:
ein erstes Wärmetauschbypassrohr, das ein Ende und ein anderes Ende des Abschnitts des ersten Kältemittelrohrs (22) verbindet, das durch den ersten Wärmetauscher (7) läuft; und
einen Bypassschaltungsmechanismus, der in der Lage ist, zwischen einem Zustand, in dem Kältemittel durch den Abschnitt des ersten Kältemittelrohrs (22) fließt, das durch den ersten Wärmetauscher (7) läuft, und einem Zustand zu schalten, in dem Kältemittel durch das erste Wärmetauschbypassrohr fließt.

12. Kühlvorrichtung (401) nach Anspruch 11, weiter umfassend:
Temperaturerfassungseinheiten (6T, 2T) zum Erfassen von mindestens der Lufttemperatur, die den Verdampfer (6) umgibt, oder der abgelassenen Kältemitteltemperatur von mindestens dem ersten Kompressionselement (2c) oder dem zweiten Kompressionselement (2d); und
eine Bypasssteuereinheit (99) zum Steuern des Bypassschaltungsmechanismus und Erhöhen der Menge von Kältemittel, die durch den Abschnitt des ersten Kältemittelrohrs fließt, das durch den ersten Wärmetauscher läuft, wenn die folgende Bedingung erfüllt ist:
die Lufttemperatur höher ist als eine vorbestimmte Hochtemperatur-Lufttemperatur, wenn der Wert, erfasst mittels der Temperaturerfassungseinheiten (6T, 2T), eine Lufttemperatur ist, oder die Kältemitteltemperatur niedriger ist als eine vorbestimmte Niedrigtemperatur-Kältemitteltemperatur, wenn der Wert, erfasst mittels der Temperaturerfassungseinheiten (6T, 2T), eine Kältemitteltemperatur ist.

13. Kühlvorrichtung (401) nach einem der Ansprüche 9 bis 12, weiter umfassend:
eine Wassertemperaturerfassungseinheit (910T) zum Erfassen der Temperatur von Wasser, das durch irgendeine Position in dem Wasserrohrsystem (910) fließt;
eine erste Kältemitteltemperaturerfassungseinheit (22T) zum Erfassen der Temperatur des Kältemittels, das durch das erste Kältemittelrohr (22) läuft; und
eine wasser-korrespondierende Kältemittelmengensteuereinheit (99) zum Steuern des Verzweigungsexpansionsmechanismus (9e) und Erhöhen der Menge von Kältemittel, die durchläuft, wenn die Differenz zwischen der Temperatur, erfasst mittels der Wassertemperaturerfassungseinheit (910T), und der Temperatur, erfasst mittels der ersten Kältemitteltemperaturerfassungseinheit (22T) weniger als ein vorbestimmter Wert ist.

14. Kühlvorrichtung (1, 201, 301, 401) nach einem der Ansprüche 1 bis 13, weiter umfassend:
eine erste Antriebseinheit zum Antreiben des ersten Kompressionselements (2c); und
eine zweite Antriebseinheit zum Antreiben des zweiten Kompressionselements (2d), unabhängig von dem ersten Kompressionselement.

15. Kühlvorrichtung (1, 201, 301, 401) nach einem der Ansprüche 1 bis 13, wobei
das erste Kompressionselement (2c) und das zweite Kompressionselement (2d) eine gemeinsame Rotationswelle (21c) zum Durchführen von Kompressionsarbeit mittels rotierenden Antreibens jedes der Kompressionselemente aufweisen.

16. Kühlvorrichtung (1, 201, 301, 401) nach einem der Ansprüche 1 bis 15, wobei das aktive Kältemittel Kohlenstoffdioxid ist.

## Revendications

1. Appareil de réfrigération (1) comprenant :
un système de tube d'eau (910) présentant un tube d'entrée d'eau (901) pour conduire l'eau fournie de l'extérieur vers un point d'embranchement d'eau (W), des premiers tubes d'eau d'embranchement (904, 905) et des seconds tubes d'eau d'embranchement (902, 903) s'étendant à partir du point d'embranchement d'eau (W), et un tube de sortie d'eau (906) conduisant vers l'extérieur à partir d'un point convergent (Z) où les premiers tubes d'eau d'embranchement (904, 905) et les seconds tubes d'eau d'embranchement (902, 903) convergent, dans lequel le réfrigérant actif est dans un état supercritique dans au moins une partie du cycle de réfrigération ; un mécanisme d'expansion principal (5) pour dépressuriser le réfrigérant ;
un évaporateur (6) qui est connecté au mécanisme d'expansion principal (5) et qui évapore du réfrigérant ;
un premier élément de compression (2c) pour puiser du réfrigérant qui a traversé l'évaporateur (6) et pour compresser et décharger le réfrigérant ;
un second élément de compression (2d) pour puiser le réfrigérant déchargé du premier élément de compression et pour compresser et décharger le réfrigérant ;
un premier tube de réfrigérant (22) pour puiser le réfrigérant déchargé du premier élément de compression (2c) dans le second élément de compression (2d) ;
un premier échangeur de chaleur (7) pour effectuer un échange de chaleur entre le réfrigérant traversant le premier tube de réfrigérant (22) et l'eau s'écoulant à travers les premiers tubes d'eau d'embranchement (904, 905) ;
des seconds tubes de réfrigérant (71, 72) connectant un côté de décharge du second élément de compression (2d) à une extrémité d'un second échangeur de chaleur (4) et l'autre extrémité du second échangeur de chaleur (4) au mécanisme d'expansion principal (5) ; de sorte que, pendant le fonctionnement,
le second échangeur de chaleur (4) soumet le réfrigérant traversant les seconds tubes de réfrigérant (71, 72) à un échange de chaleur avec l'eau s'écoulant à travers les seconds tubes d'eau d'embranchement (902, 903), et non à un échange de chaleur avec l'eau s'écoulant à travers le tube d'entrée d'eau (901), selon lequel ladite eau s'écoulant à travers les premiers tubes d'eau d'embranchement (904, 905) n'est pas chauffée par échange de chaleur avec le réfrigérant avant de s'écouler dans le premier échangeur de chaleur (7) et ladite eau s'écoulant à travers les seconds tubes d'eau d'embranchement (902, 903) n'est pas chauffée par échange de chaleur avec le réfrigérant avant de s'écouler dans le second échangeur de chaleur (4).

2. Appareil de réfrigération (1) selon la revendication 1, comprenant en outre :
un mécanisme d'ajustement de rapport de débit (911) capable d'ajuster un rapport entre une quantité d'eau s'écoulant à travers les premiers tubes d'eau d'embranchement (904, 905) et une quantité d'eau s'écoulant à travers les seconds tubes d'eau d'embranchement (902, 903).

3. Appareil de réfrigération (1) selon la revendication 2, comprenant en outre :
une unité de détection de capacité de chauffage (4T, 4P, 7T, 7P) capable de détecter une capacité du réfrigérant traversant le premier échangeur de chaleur (7) pour chauffer l'eau et une capacité du réfrigérant traversant le second échangeur de chaleur (4) pour chauffer l'eau ; et
une unité de commande de quantité de distribution d'eau (99) pour ajuster le rapport entre la quantité d'eau s'écoulant à travers les premiers tubes d'eau d'embranchement (904, 905) et la quantité d'eau s'écoulant à travers les seconds tubes d'eau d'embranchement (902, 903) en commandant le mécanisme d'ajustement de débit (911) en fonction d'un rapport entre les capacités de chauffage du premier échangeur de chaleur (7) et du second échangeur de chaleur (4) détectées par l'unité de détection de capacité de chauffage (4T, 4P, 7T, 7P).

4. Appareil de réfrigération (201) selon l'une quelconque des revendications 1 à 3, dans lequel
les seconds tubes de réfrigérant (71, 72) présentent un troisième tube de réfrigérant (72) pour connecter le second échangeur de chaleur (4) et le mécanisme d'expansion principal (5) ;
l'appareil de réfrigération comprenant en outre :
un quatrième tube de réfrigérant (77, 2a) pour connecter l'évaporateur (6) et un côté d'admission du premier élément de compression (2c) ;
un troisième échangeur de chaleur (8, 8L, 8G) pour effectuer un échange de chaleur entre le réfrigérant s'écoulant à travers le troisième tube de réfrigérant (72) et le réfrigérant s'écoulant à travers le quatrième tube de réfrigérant (77, 2a) ;
un troisième tube de dérivation d'échange de chaleur (8B) pour connecter une extrémité et une autre extrémité d'une partie du troisième tube de réfrigérant (72) traversant le troisième échangeur de chaleur (8, 8L) ; et
un mécanisme de commutation d'échangeur de chaleur (8C) capable de commuter entre un état dans lequel du réfrigérant s'écoule à travers la partie du troisième tube de réfrigérant (72) traversant le troisième échangeur de chaleur (8, 8L), et un état dans lequel du réfrigérant s'écoule à travers le troisième tube de dérivation d'échange de chaleur (8B).

5. Appareil de réfrigération (201) selon la revendication 4, comprenant en outre :
des unités de détection de température (2T, 6T) pour détecter au moins une température d'air entourant l'évaporateur (6) ou une température de réfrigérant déchargé d'au moins le premier élément de compression (2c) ou le second élément de compression (2d) ; et
une unité de commande de quantité d'échange de chaleur (99) pour commander le mécanisme de commutation d'échangeur de chaleur (8C) et augmenter la quantité de réfrigérant s'écoulant à travers la partie du troisième tube de réfrigérant (72) traversant le troisième échangeur de chaleur (8, 8L) lorsque la condition suivante est remplie :
la température d'air est supérieure à une température d'air à haute température prédéterminée lorsqu'une valeur détectée par les unités de détection de température (2T, 6T) est une température d'air, ou la température de réfrigérant est inférieure à une température de réfrigérant à basse température prédéterminée lorsque la valeur détectée par les unités de détection de température (2T, 6T) est une température de réfrigérant.

6. Appareil de réfrigération (301) selon l'une quelconque des revendications 1 à 3, dans lequel
les seconds tubes de réfrigérant (71, 72) présentent un troisième tube de réfrigérant (72) connectant le second échangeur de chaleur (4) et le mécanisme d'expansion principal (5) ;
l'appareil de réfrigération comprenant en outre :
un mécanisme d'expansion d'embranchement (9e) pour dépressuriser le réfrigérant ;
un cinquième tube de réfrigérant (9a) qui bifurque du troisième tube de réfrigérant (72) et s'étend jusqu'au mécanisme d'expansion d'embranchement (9e) ;
des sixièmes tubes de réfrigérant (9b, 9c) s'étendant du mécanisme d'expansion d'embranchement (9e) au premier tube de réfrigérant (22) ; et
un quatrième échangeur de chaleur (20) pour effectuer un échange de chaleur entre le réfrigérant s'écoulant à travers le troisième tube de réfrigérant (72) et le réfrigérant s'écoulant à travers les sixièmes tubes de réfrigérant (9b, 9c).

7. Appareil de réfrigération (301) selon la revendication 6, comprenant en outre :
des unités sensorielles de température (6T, 2T) pour détecter au moins la température d'air entourant l'évaporateur (6) ou la température de réfrigérant déchargé d'au moins le premier élément de compression (2c) ou le second élément de compression (2d) ; et
une unité de commande de quantité embranchée (99) pour commander le mécanisme d'expansion d'embranchement (9e) et augmenter la quantité de réfrigérant traversant lorsque la condition suivante est remplie :
la température d'air est inférieure à une température d'air à basse température prédéterminée lorsque la valeur détectée par les unités de détection de température (6T, 2T) est une température d'air, ou la température de réfrigérant est supérieure à une température de réfrigérant à haute température prédéterminée lorsque la valeur détectée par les unités de détection de température (6T, 2T) est une température de réfrigérant.

8. Appareil de réfrigération (301) selon la revendication 6 ou 7, comprenant en outre :
une unité de détection de température (910T) pour détecter une température d'eau s'écoulant à travers n'importe quelle position dans le système de tube d'eau (910) ;
une première unité de détection de température de réfrigérant (22T) pour détecter une température de réfrigérant traversant le premier tube de réfrigérant (22) ; et
une unité de commande de quantité de distribution de réfrigérant (99) pour commander le mécanisme d'expansion d'embranchement (9e) et augmenter la quantité de réfrigérant traversant lorsque la différence entre la température détectée par l'unité de détection de température d'eau (910T) et la température détectée par la première unité de détection de température de réfrigérant (22T) est inférieure à une valeur prédéterminée.

9. Appareil de réfrigération (401) selon l'une quelconque des revendications 1 à 3, dans lequel
les seconds tubes de réfrigérant (71, 72) présentent un troisième tube de réfrigérant (72) connectant le second échangeur de chaleur (4) et le mécanisme d'expansion principal (5) ; l'appareil de réfrigération comprenant en outre :
un mécanisme d'expansion d'embranchement (9e) pour dépressuriser le réfrigérant ;
des quatrièmes tubes de réfrigérant (77, 2a) connectant l'évaporateur (6) et un côté d'admission du premier élément de compression (2c) ;
un troisième échangeur de chaleur (8, 8L, 8G) pour effectuer un échange de chaleur entre du réfrigérant s'écoulant à travers le troisième tube de réfrigérant (72) et du réfrigérant s'écoulant à travers les quatrièmes tubes de réfrigérant (77, 2a) ;
un cinquième tube de réfrigérant (9a) qui bifurque du troisième tube de réfrigérant (72) et s'étend jusqu'au mécanisme d'expansion d'embranchement (9e) ;
des sixièmes tubes de réfrigérant (9b, 9c) connectant le mécanisme d'expansion d'embranchement (9e) et le premier tube de réfrigérant (22) ; et
un quatrième échangeur de chaleur (20) pour effectuer un échange de chaleur entre le réfrigérant s'écoulant à travers le troisième tube de réfrigérant (72) et le réfrigérant s'écoulant à travers les sixièmes tubes de réfrigérant (9b, 9c).

10. Appareil de réfrigération (401) selon la revendication 9, comprenant en outre :
des unités sensorielles de température (6T, 2T) pour détecter au moins la température d'air entourant l'évaporateur (6) ou la température de réfrigérant déchargé d'au moins le premier élément de compression (2c) ou le second élément de compression (2d) ; et
une unité de commande de quantité de chaleur embranchée (99) pour commander le mécanisme d'expansion d'embranchement (9e) et augmenter la quantité de réfrigérant traversant lorsque la condition suivante est remplie : la température d'air est inférieure à une température d'air à basse température prédéterminée lorsque la valeur détectée par les unités de détection de température (6T, 2T) est une température d'air, ou la température de réfrigérant est supérieure à une température de réfrigérant à haute température prédéterminée lorsque la valeur détectée par les unités de détection de température (6T, 2T) est une température de réfrigérant.

11. Appareil de réfrigération (401) selon la revendication 9 ou 10, comprenant en outre :
un premier tube de dérivation d'échange de chaleur connectant une extrémité et une autre extrémité de la partie du premier tube de réfrigérant (22) traversant le premier échangeur de chaleur (7) ; et
un mécanisme de commutation de dérivation capable de commuter entre un état dans lequel du réfrigérant s'écoule à travers la partie du premier tube de réfrigérant (22) traversant le premier échangeur de chaleur (7), et un état dans lequel du réfrigérant s'écoule à travers le premier tube de dérivation d'échange de chaleur.

12. Appareil de réfrigération (401) selon la revendication 11, comprenant en outre :
des unités sensorielles de température (6T, 2T) pour détecter au moins la température d'air entourant l'évaporateur (6) ou la température de réfrigérant déchargé d'au moins le premier élément de compression (2c) ou le second élément de compression (2d) ; et
une unité de commande de dérivation (99) pour commander le mécanisme de commutation de dérivation et augmenter la quantité de réfrigérant s'écoulant à travers la partie du premier tube de réfrigérant traversant le premier échangeur de chaleur lorsque la condition suivante est remplie :
la température d'air est supérieure à une température d'air à haute température prédéterminée lorsque la valeur détectée par les unités de détection de température (6T, 2T) est une température d'air, ou la température de réfrigérant est inférieure à une température de réfrigérant à basse température prédéterminée lorsque la valeur détectée par les unités de détection de température (6T, 2T) est une température de réfrigérant.

13. Appareil de réfrigération (401) selon l'une quelconque des revendications 9 à 12, comprenant en outre :
une unité de détection de température d'eau (910T) pour détecter la température d'eau s'écoulant à travers n'importe quelle position dans le système de tube d'eau (910) ;
une première unité de détection de température de réfrigérant (22T) pour détecter la température de réfrigérant traversant le premier tube de réfrigérant (22) ; et
une unité de commande de quantité de réfrigérant correspondant à l'eau (99) pour commander le mécanisme d'expansion d'embranchement (9e) et augmenter la quantité de réfrigérant traversant lorsque la différence entre la température détectée par l'unité de détection de température d'eau (910T) et la température détectée par la première unité de détection de température de réfrigérant (22T) est inférieure à une valeur prédéterminée.

14. Appareil de réfrigération (1, 201, 301, 401) selon l'une quelconque des revendications 1 à 13, comprenant en outre :
une première unité d'entraînement pour entraîner le premier élément de compression (2c) ; et
une seconde unité d'entraînement pour entraîner le second élément de compression (2d) indépendamment du premier élément de compression.

15. Appareil de réfrigération (1, 201, 301, 401) selon l'une quelconque des revendications 1 à 13, dans lequel
le premier élément de compression (2c) et le second élément de compression (2d) présentent un arbre rotatif partagé (21c) pour effectuer un travail de compression en entraînant de manière rotative chacun des éléments de compression.

16. Appareil de réfrigération (1, 201, 301, 401) selon l'une quelconque des revendications 1 à 15, dans lequel
le réfrigérant actif est du dioxyde de carbone.
